# EUROPÄISCHE PATENTSCHRIFT

(11) **EP 4 339 086 B1**
(45) Veröffentlichungstag und Bekanntmachung des Hinweises auf die Patenterteilung: **05.11.2025**
(21) Anmeldenummer: 22195713.7
(22) Anmeldetag: 14.09.2022
(51) Int. Cl.: B62K 19/38, B62L 1/00, B62K 3/04

(54) **FAHRRADRAHMEN MIT UND BREMSMITTELMONTAGEEINRICHTUNG ZUR MONTAGE VERSCHIEDENER BREMSSATTELADAPTER**
BICYCLE FRAME WITH BRAKE MOUNTING DEVICE FOR MOUNTING VARIOUS BRAKE CALIPER ADAPTERS AND BRAKE MOUNTING DEVICE
CADRE DE BICYCLETTE AVEC DISPOSITIF DE MONTAGE DE FREIN POUR LE MONTAGE DE DIVERS ADAPTATEURS D'ÉTRIER DE FREIN ET DISPOSITIF DE MONTAGE DE FREIN

(43) Veröffentlichungstag der Anmeldung: 20.03.2024
(73) Patentinhaber: Accell Group N.V., 8444 AR Heerenveen (NL)
(72) Erfinder: KUTSCHKI, Tina, 8444 AR Heerenveen (NL); PAUKER, Michael, 8444 AR Heerenveen (NL); BEAULIEU, Cyril, 8444 AR Heerenveen (NL)
(74) Vertreter: V.O.

(56) Entgegenhaltungen:
- DE-A1- 102014 208 317
- DE-A1- 102020 132 262
- DE-U1- 202017 007 123
- US-B1- 11 299 230

## Beschreibung

Vorliegende Erfindung betrifft einen Fahrradrahmen, umfassend eine Bremsmittelmontageeinrichtung, zur wahlweisen Montage entweder eines ersten Bremssatteladapters oder eines, vom ersten Bremssatteladapter verschiedenen zweiten Bremssatteladapters, wobei am ersten Bremssatteladapter wenigstens ein erster Bremssattel und am zweiten Bremssatteladapter wenigstens der erste Bremssattel und/oder wenigstens ein, insbesondere vom ersten Bremssattel verschiedener, zweiter Bremssattel montierbar ist.

Derartige Fahrradrahmen und somit auch Fahrräder bzw. entsprechende Montagevorrichtungen zur Montage von entsprechenden Bremsmitteln sind aus dem Stand der Technik bekannt. Zum Beispiel zeigt das Dokument DE 10 2014 208317 A1 eine gattungsgemäße Bremsmittelmontageeinrichtung.

Sie ermöglichen durch die Montage unterschiedlicher Bremssättel eine Anpassung des Fahrrades an unterschiedliche Bremsscheiben. So ist es mitunter gewünscht, ein Fahrrad anstelle einer kleineren Bremsscheibe, beispielsweise einer Bremsscheibe mit 160 mm Durchmesser, mit einer größeren Bremsscheibe, beispielsweise einer Bremsscheibe mit 180 mm Durchmesser, und/oder einem veränderten Bremssattel auszurüsten.

Hier sind unterschiedliche Lösungen bekannt, die alle eine sehr komplexe Ausbildung von Bremsmittelmontageeinrichtungen erfordern. Darüber hinaus sind oft unterschiedliche Bauteile zur Verfügung zu stellen, die den Austausch der geforderten Bremsmittel erschweren.

Neben der Situation, dass an einem Fahrradrahmen unterschiedliche Bremssättel montiert werden sollen, ist von der Erfindung auch eine Situation betroffen, bei der derselbe Bremssattel mit unterschiedlichen Bremsscheiben verwendet werden soll. Darüber hinaus betrifft die Erfindung auch eine Situation, bei der unterschiedliche Laufräder mit unterschiedlichen Bremsscheiben verwendet, bzw. eine Situation, bei der ein und dasselbe Laufrad mit unterschiedlichen Bremsscheiben verwendet werden sollen.

Der vorliegenden Erfindung liegt die Aufgabe zugrunde, eine Lösung zur Verfügung zu stellen, die die einfache und kostengünstige Montage unterschiedlicher Bremsmittel an einem Fahrrad erlaubt.

Diese Aufgabe wird durch die Vorrichtungen gemäß den unabhängigen Ansprüchen gelöst.

Insbesondere wird diese Aufgabe gelöst durch einen Fahrradrahmen, umfassend eine Bremsmittelmontageeinrichtung, zur wahlweisen Montage entweder eines ersten Bremssatteladapters oder eines, vom ersten Bremssatteladapter verschiedenen zweiten Bremssatteladapters, wobei am ersten Bremssatteladapter wenigstens ein erster Bremssattel und am zweiten Bremssatteladapter wenigstens der erste Bremssattel und/oder wenigstens ein, insbesondere vom ersten Bremssattel verschiedener, zweiter Bremssattel montierbar ist; wobei die Bremsmittelmontageeinrichtung einen Montageadapter und eine Montageadapteraufnahme umfasst, wobei die Montageadapteraufnahme derart am Fahrradrahmen ausgebildet ist, dass darin der Montageadapter lösbar festlegbar ist, und zwar entweder in einer ersten Montageausrichtung A oder wenigstens in einer, von der ersten Montageausrichtung A verschiedenen zweiten Montageausrichtung B; wobei in der ersten Montageausrichtung A der erste Bremssatteladapter über eine Kraftkopplung mit dem Montageadapter am Fahrradrahmen festlegbar ist, und in der zweiten Montageausrichtung der zweite Bremssatteladapter über eine Kraftkopplung mit dem Montageadapter am Fahrradrahmen festlegbar ist.

Darüber hinaus wird diese Aufgabe gelöst durch eine Bremsmittelmontageeinrichtung, zur Montage entweder eines ersten Bremssatteladapters oder eines, vom ersten Bremssatteladapter verschiedenen zweiten Bremssatteladapters, an denen jeweils wenigsten ein Bremssattel montierbar ist, an einem Fahrradrahmen, insbesondere wie er hierin offenbart ist, wobei die Bremsmittelmontageeinrichtung einen Montageadapter derart aufweist, dass dieser in einer Montageadapteraufnahme am Fahrradrahmen lösbar festlegbar ist, und zwar entweder in einer ersten Montageausrichtung A oder in wenigstens einer, von der ersten Montageausrichtung A verschiedenen zweiten Montageausrichtung B; wobei in der ersten Montageausrichtung A der erste Bremssatteladapter über eine Kraftkopplung mit dem Montageadapter am Fahrradrahmen festlegbar ist, und in der zweiten Montageausrichtung B der zweite Bremssatteladapter über eine Kraftkopplung mit dem Montageadapter am Fahrradrahmen festlegbar ist.

Insbesondere wird die Aufgabe gelöst durch ein Bremsmittel, zur Montage an einem Fahrradrahmen, insbesondere wie er hierin offenbart ist, umfassend wenigstens einen ersten Bremssatteladapter und wenigstens einen daran befestigbaren ersten Bremssattel, weiter umfassend einen Montageadapter derart, dass dieser in einer Montageadapteraufnahme am Fahrradrahmen lösbar festlegbar ist, und zwar entweder in einer ersten Montageausrichtung A oder in wenigstens einer, von der ersten Montageausrichtung A verschiedenen zweiten Montageausrichtung B; wobei in der ersten Montageausrichtung A der erste Bremssatteladapter über eine Kraftkopplung mit dem Montageadapter am Fahrradrahmen festlegbar ist, und in der zweiten Montageausrichtung B ein zweiter, vom ersten Bremssatteladapter verschiedener Bremssatteladapter, zur Montage wenigstens des ersten und/oder eines, vom ersten Bremssattel insbesondere verschiedenen, zweiten Bremssattels, über eine Kraftkopplung mit dem Montageadapter am Fahrradrahmen festlegbar ist.

Auch wird die Aufgabe gelöst durch ein Fahrrad, umfassend einen Fahrradrahmen wie er hierin offenbart ist, weiter umfassend wenigstens ein rotierbares Laufrad, mit einer ersten oder zweiten Bremsscheibe, und ein Bremsmittel wie es hierin offenbart ist.

Optional weist der Fahrradrahmen wenigstens eine Laufradaufnahme, zur wahlweisen Montage wenigstens eines rotierbaren Laufrades mit einer ersten Bremsscheibe, oder eines rotierbaren Laufrades mit einer von der ersten Bremsscheibe verschiedenen zweiten Bremsscheibe auf. Diese rotierbaren Laufräder können ein und dasselbe Laufrad sein, es sind aber auch unterschiedliche Laufräder darstellbar. Dabei kann es sein, dass in der ersten Montageausrichtung der erste Bremssatteladapter über eine Kraftkopplung mit dem Montageadapter derart am Fahrradrahmen festlegbar ist, dass der erste Bremssattel mit der ersten Bremsscheibe am Laufrad, zum Einwirken einer auf das Laufrad wirkenden Bremskraft in Kraftkopplung bringbar ist, und in der zweiten Montageausrichtung der zweite Bremssatteladapter über eine Kraftkopplung mit dem Montageadapter derart am Fahrradrahmen festlegbar ist, dass der erste und/oder zweite Bremssattel mit der zweiten Bremsscheibe am Laufrad, zum Einwirken einer auf das Laufrad wirkenden Bremskraft in Kraftkopplung bringbar ist.

Die Bremssättel können u.a. hinsichtlich ihrer Montagepunkte und/oder hinsichtlich ihrer Abmessungen und/oder technischen Funktionsweise unterschiedlich sein. Selbiges gilt für die Bremsscheiben, sie können sich u.a. in Art ihrer Ausbildung und/oder in ihrer Geometrie, insbesondere ihrem Radius, und/oder in ihrer Dicke und/oder der Ausbildung der zur Verfügung gestellten Reibflächen für korrespondierende Bremsbacken unterschiedlich sein. Die Bremssatteladapter können u.a. wenigstens hinsichtlich ihrer Abmessungen und/oder ihrer Montagepunkte für Bremssättel und/oder der Montagepunkte zur Befestigung am Fahrradrahmen unterschiedlich sein. Der zweite Bremssattel kann zum ersten Bremssattel verschieden aber auch identisch sein.

Die Bremsmittelmontageeinrichtung ist dabei vorzugsweise im Bereich eines Hinterrades eines Fahrrades insbesondere im Bereich des Ausfallendes eines entsprechenden Fahrradrahmens angeordnet. Es ist aber auch denkbar, eine solche Bremsmittelmontageeinrichtung an einem vorderen Bereich und insbesondere an einer Vorderradgabel des Fahrradrahmens auszubilden.

Hinsichtlich der Geometrie bzw. räumlichen Erstreckung eines Fahrradrahmens bzw. eines Fahrrades, weisen diese in einer Richtung vom Hinterrad zum Vorderrad eine Haupterstreckungsachse auf, die, wenn das Fahrrad auf dem Boden steht, parallel zu diesem verläuft. Die Haupterstreckungsebene E_{H} wird durch diese Haupterstreckungsachse und eine Orthogonale zum Boden definiert, in Bezug auf ein orthogonal auf dem Boden stehendes Fahrrad. Sie wird beispielsweise durch die von einem Hinterrad aufgespannte Fläche gebildet. Sie verläuft insbesondere durch das Oberrohr, also mittig entlang der Haupterstreckungsachse, beispielsweise zwischen der linken und rechten Laufradaufnahme am Hinterrad.

Optional ist die Montageadapteraufnahme integral am Fahrradrahmen ausgebildet. Insbesondere kann dies bedeuten, dass insbesondere bei der Herstellung des Fahrradrahmens, die Montageaufnahme einstückig mit dem Fahrradrahmen verbunden bzw. damit ausbildet wird. Sie ist optional unlösbar mit dem Fahrradrahmen verbunden. Weiter optional ist die Montageadapteraufnahme integral in einer Kettenstrebe eines Fahrradrahmens ausgebildet und insbesondere auf einer in Bezug auf die Haupterstreckungsachse linksseitigen Kettenstrebe.

Optional weist, insbesondere aufgrund einer möglichen integralen Ausbildung mit dem Fahrradrahmen, die Montageadapteraufnahme eine unveränderliche Geometrie und insbesondere, wie im Folgenden näher beschrieben, eine unveränderliche Innengeometrie eines Aufnahmeraums auf und/oder eine unveränderliche Position am Fahrradrahmen auf.

Es ist möglich, dass die Montageadapteraufnahme wenigstens einen, optional von wenigstens zwei Seiten und weiter optional von wenigstens drei Seiten eingegrenzten Aufnahmeraum aufweist. In diesen Aufnahmeraum kann der Montageadapter, optional über eine Einführöffnung, sowohl in der ersten Montageausrichtung als auch in der zweiten Montageausrichtung eingesetzt und darin festgelegt werden. Das Einsetzen erfolgt dabei optional werkzeuglos und insbesondere über eine translatorische, insbesondere einer entlang wenigstens einer Achse gerichteten Bewegung. Es ist auch denkbar, dass die Montageadapteraufnahme derart ausgebildet ist und insbesondere einen derartigen Aufnahmeraum aufweist, dass darin der Montageadapter in einer Kombination aus einer schwenk- und translatorischen Bewegung eingesetzt werden kann. Der Aufnahmeraum ist optional derart eingegrenzt, dass sich eine Einführöffnung bildet, in die der Montageadapter eingeführt werden kann.

Optional ist die Einführöffnung derart am Fahrradrahmen ausgebildet, optional in einer Wandung des Fahrradrahmens, dass sie vom ersten und/oder zweiten Bremssatteladapter weg zeigt, wenn diese am Fahrradrahmen montiert sind. Optional ist es denkbar, dass die Einführöffnung in eine im Wesentlichen entgegengesetzte Richtung zeigt als die Seite am Fahrradrahmen, an der der Bremssatteladapter wenigstens abschnittsweise montiert ist. Es ist auch denkbar, dass die Einführöffnung in Bezug auf eine Haupterstreckungsebene E_{H} des Fahrradrahmens in einem Winkel zwischen 70 Grad und 110 Grad, optional 90 Grad zur Seite zeigt. Es ist denkbar, dass die Einführöffnung in Bezug auf die Haupterstreckungsebene E_{H} bzw. die Laufradaufnahmen bildenden Kettenstreben nach innen zeigt, also die Richtung, in der das Laufrad aufgenommen ist. Es ist denkbar, dass die Montageadapteraufnahme auf einer Unterseite einer Kettenstrebe des Fahrradrahmens ausgebildet ist und/oder auf einer Seite, insbesondere Innenseite, also in dem Bereich zwischen zwei Laufradaufnahmen, zwischen denen das Laufrad läuft. Es ist auch denkbar, dass sie auf einer Außenseite der Kettenstrebe ausgebildet ist. Diese Außenseite ist der Innenseite entgegengesetzt.

Die Montageadapteraufnahme ist optional so ausgebildet, dass deren Einführöffnung in eine Richtung weist, die der Bremskraft-Krafteinleitungsrichtung entlang einer Krafteinleitungsachse des Bremssattels beim Bremsvorgang verschieden ist. Eine solche Krafteinleitungsachse ist die Kraftachse, die im Befestigungspunkt des Bremssatteladapter im Bereich des Montageadapters verläuft und sich in der Richtung erstreckt, in der, bei einem Bremsvorgang, Kräfte in den Befestigungspunkt eingeleitet werden. Es ist möglich, dass die Einführöffnung in eine Richtung weist, die der Richtung entspricht, in der Bremskräfte in den Befestigungspunkt eingeleitet werden.

Es kann sein, dass die Montageadapteraufnahme wenigstens abschnittsweise als Sackloch ausgebildet ist. Ein solches Sackloch kann beispielsweise in einem Abschnitt ausgebildet sein, in dem der Montagadapter angeordnet ist, wenn er am Fahrradrahmen bzw. am Bremssatteladapter festgelegt ist. Die Position, in der der Montageadapter in der Montageadapteraufnahme festgelegt ist, kann als Montageposition bezeichnet werden. Der in der Montageposition eingenommene Raum in der Montageadapteraufnahme kann als Montageraum bezeichnet werden. Er schließt optional an die Einführöffnung bzw. an einen Einführbereich an, der die Einführöffnung umfasst. Einführbereich und Montageraum sind optional an unterschiedlichen Positionen ausgebildet und durchgängig miteinander verbunden, sodass der Montageadapter über den Einführbereich in den Montageraum eingeführt und dort festgelegt werden kann. Der Montageraum ist optional wenigstens abschnittsweise als Sackloch ausgebildet. Es ist denkbar, dass der Einführbereich wenigstens zwei, optional wenigstens drei Seitenwände aufweist, die ihn begrenzen. Selbiges gilt für den Montageraum. Insbesondere ist es denkbar, dass der Montageraum vierseitig von Seitenwänden umgrenzt wird. Er weist optional eine Stirnseite bzw. Stirnseitenwandung auf, die in Richtung des Fahrradrahmens und insbesondere einer Kettenstrebe zeigt. Ein Aufnahmeraum mit Stirnseite bzw. Stirnseitenwandung bildet optional ein Sackloch.

Optional sind die Montageadapteraufnahme und der Montageadapter derart komplementär geometrisch zueinander ausgebildet, dass der Montageadapter in der ersten Montageausrichtung und/oder in der zweiten Montageausrichtung in der definierten Montageposition in der Montageadapteraufnahme positionierbar ist, optional in ein und derselben Montageposition positionierbar und weiter optional in ein und demselben Montageraum positionierbar ist. Optional ist dabei die Montageadapteraufnahme und insbesondere sein Montageraum derart ausgebildet, dass er in seiner Innengeometrie wenigstens abschnittsweise der Außengeometrie des Montageadapters entspricht. Optional ist er so ausgebildet, dass der Montageadapter in lediglich wenigstens zwei, optional in genau zwei Montageausrichtungen in die Montageadapteraufnahme und optional in den Montageraum eingeführt werden kann.

Der Montageraum ist optional so gestaltet, dass die Montageposition des Montageadapters ortsgenau definiert ist bzw. so definiert ist, dass der Montageadapter lediglich entlang einer Achse in der Montageposition bewegbar ist. Diese Achse entspricht einer Befestigungsachse, über die, wie im Späteren noch beschrieben, der Montageadapter mit einem Befestigungsgegenmittel und Befestigungsmittel am Fahrradrahmen und dem Bremssatteladapter festgelegt werden kann. Vor dieser Befestigung ist optional diese Bewegbarkeit gegeben. Nach der Befestigung optional nicht.

Der Montageadapter weist optional eine Haupterstreckungsachse auf. Entlang derer ist er optional in den Montageadapter, insbesondere in den Montageraum translatorisch einführbar.

Optional ist der Montageadapter insbesondere in Bezug auf wenigstens eine Symmetrieebene E, wenigstens abschnittsweise derart symmetrisch ausgebildet, dass er durch eine räumliche Ausrichtungsänderung relativ zur Montageadapteraufnahme, beispielsweise durch eine Rotation, optional durch eine 180-Grad-Rotation, um wenigstens eine Erstreckungsachse A_{E}, und insbesondere seine Haupterstreckungsachse, die insbesondere durch die Symmetrieebene E verläuft, von der ersten Montageausrichtung in die zweite Ausrichtung gebracht werden kann. Optional ist der Montageadapter wenigstens abschnittsweise entlang einer Symmetrieebene spiegelsymmetrisch ausgebildet. Der Montageadapter ist optional passgenau, insbesondere mit einem Spiel zwischen 0,2 mm und 0,05 mm, optional mit einem Spiel von im Wesentlichen 0,1 mm, in dem Montageraum angeordnet, und insbesondere in Bezug auf Wandflächen des Montageraums, an denen der Montageadapter mit seinen Wandflächen ansteht und so in seiner Montageposition geführt wird. Die spiegelsymmetrische Ausbildung gilt insbesondere in diesem Fall. "Spiel" kann sich auf eine Mehrzahl, insbesondere alle Bewegungsrichtungen beziehen, die von der Einführrichtung des Montageadapters in den Montageraum und/oder einer Richtung entlang der Krafteinleitungsachse unterscheiden.

Optional ist der Montageadapter wenigstens abschnittweise, und insbesondere in einem Bereich, in dem er entlang wenigstens einer, insbesondere zwei Achsen ortsfest im Montageraum, insbesondere durch Führungselemente der Montageadapteraufnahme, positioniert wird, nicht rotationssymmetrisch ausgebildet. Er weist weiter optional Anstehflächen auf, die nach dem Einführen des Montageadapters in den Montageraum und/oder den Einführbereich, eine Rotation des Montageadapters verhindern. Solche Anstehflächen können Wandungen des Montageadapters sein. Es können dafür vorgesehene Vorsprünge und/oder Nuten sein. Optional ist er so ausgebildet, dass er in Bezug auf den Montageraum lediglich axial und insbesondere entlang einer Achse, insbesondere der Krafteinleitungsachse und/oder einer Kraftwirkungsachse eines Befestigungsmittels/Befestigungsgegenmittel zu dessen Festlegung im Montageraum geführt werden kann.

Optional weist die Montageadapteraufnahme Führungselemente auf, die den Montageadapter in der ersten Montageausrichtung und der zweiten Montageausrichtung beim Einsetzen in die Montageadapteraufnahme und/oder im eingesetzten Zustand, in Bezug auf den Fahrradrahmen führen, optional in dieser Position, weiter optional in ein und derselben Montageposition positionieren. Die Führungselemente stehen in der Montageposition optional an Wandungen des Montageadapters an. Optional sind die Führungselemente Wandungen der Montageadapteraufnahme und insbesondere des Fahrradrahmens. Sie können dafür vorgesehene Vorsprünge und/oder Nuten sein. Die Führungselemente können vollumfänglich den Montageadapter oder diesen auch nur abschnittsweise umfänglich umfassen. Die Führungselemente können Wandbereiche sein, die an Wandbereichen des Montageadapters anstehen und an denen der Montageadapter entlanggleiten kann. Die Führungselemente können wenigstens abschnittweise das zuvor erwähnte Sackloch bilden. Führungselemente können im Einführbereich und/oder im Montageraum ausgebildet sein.

Die Führungselemente können dazu dienen, den Montageadapter rotationszufixieren, insbesondere um die zuvor beschriebene Krafteinleitungsachse und/oder eine Achse entlang derer das insbesondere im Folgenden noch beschriebene Befestigungsmittel/Befestigungsgegenmittel wirkt und insbesondere entlang derer eine Schraube desselben in ein Schraubinnengewinde desselben eingeschraubt bzw. herausgeschraubt wird. Es ist auch möglich, dass die Führungselemente einer Rotationsfixierung um die Haupterstreckungsachse des Montageadapters dienen. Die Haupterstreckungsachse des Montageadapters verläuft optional in Bezug auf die Krafteinleitungsachse und/oder eine Achse entlang derer das insbesondere im Folgenden noch beschriebene Befestigungsmittel/Befestigungsgegenmittel wirkt und insbesondere entlang derer eine Schraube desselben in ein Schraubinnengewinde desselben eingeschraubt bzw. herausgeschraubt wird.

Optional weist die Montageadapteraufnahme wenigstens abschnittsweise einen Innenumfang auf, der optional den Einführbereich und/oder den Montageraum umgrenzt, der komplementär zu einem Außenumfang des Montageadapters ausgebildet ist. Optional sind der Innenumfang und der Außenumfang so gewählt, dass in diesem Bereich zwischen den sich gegenüberliegenden Flächen vom Montageadapter und Montageadapteraufnahme eine im Wesentlichen spielfreie Lagerung resultiert.

Optional weist der Montageadapter wenigstens ein Befestigungsgegenmittel auf, beispielsweise ein Schraubinnengewinde, das mit jeweils wenigstens einem Befestigungsmittel, beispielsweise einer Schraube, am ersten bzw. am zweiten Bremssatteladapter kraftkoppelbar ist, um den jeweiligen Bremssatteladapter mit dem Montageadapter kraftzukoppeln und am Fahrradrahmen festzulegen. Optional wird der Bremssatteladapter am Montageadapter verschraubt. Das Befestigungsmittel ist optional lösbar am Bremssatteladapter anordbar. Der Bremssatteladapter kann beispielsweise eine Durchführung enthalten, durch den das Befestigungsmittel und insbesondere eine Schraube geführt werden kann. Das Befestigungsmittel kann optional auch zur Festlegung des Bremssattels am Bremssatteladapter dienen. Der Bremssatteladapter kann optional weitere Befestigungsmittel und/oder Befestigungsgegenmittel insbesondere zur Festlegung des Bremssattels aufweisen.

Es ist auch denkbar, dass der Montageadapter genannte Befestigungsmittel und der Bremssatteladapter entsprechende Befestigungsgegenmittel aufweist.

Es ist denkbar, dass das Befestigungsgegenmittel, wenn der Montageadapter in der ersten Montageausrichtung in die Montageadapteraufnahme eingesetzt ist, mit einem ersten Befestigungsmittel am ersten Bremssatteladapter kraftkoppelbar ist, zur Festlegung des ersten Bremssatteladapters am Fahrradrahmen, und, wenn der Montageadapter in der zweiten Montageausrichtung in die Montageadapteraufnahme eingesetzt ist, mit diesem ersten Befestigungsmittel oder einem zweiten insbesondere davon verschiedenen Befestigungsmittel, am zweiten Bremssatteladapter kraftkoppelbar ist, zur Festlegung des zweiten Bremssatteladapters am Fahrradrahmen. Optional weist also der Montageadapter ein Befestigungsgegenmittel auf, das je nach Montageposition mit dem Befestigungsmittel des ersten Bremssatteladapters und des zweiten Bremssatteladapters kraftkoppelbar ist. Der Montageadapter ist optional ein multifunktionales Bauteil, das eine Festlegung des ersten Bremssatteladapters und des zweiten Bremssatteladapters, abhängig von seiner Montageposition am Fahrradrahmen erlaubt.

Die Montagepositionen in der Montageausrichtung A und B sind optional in Bezug auf eine Position Fahrradrahmen eindeutig definiert und optional als dieselben definiert. In Bezug auf den Fahrradrahmen entspricht die Montageposition in der Montageausrichtung A optional der Montageposition in der Montageausrichtung B.

Es ist denkbar, dass das Befestigungsgegenmittel, wenn der Montageadapter in der ersten Montageausrichtung in die Montageadapteraufnahme und insbesondere die Montageposition eingesetzt ist, relativ zum Fahrradrahmen an einer anderen Stelle positioniert ist als wenn dieser in der zweiten Montageausrichtung in die Montageadapteraufnahme, insbesondere die Montageposition eingesetzt ist.

Es ist denkbar, dass das Befestigungsgegenmittel insbesondere bei einem, wie oben definierten symmetrisch ausgebildeten Montageadapter, derart asymmetrisch am Montageadapter angeordnet ist, dass es bei einer räumlichen Ausrichtungsänderung des Montageadapters relativ zur Montageadapteraufnahme, beispielsweise durch eine Rotation, optional durch eine 180°-Rotation, um wenigstens eine Erstreckungsachse (A_{E}), die insbesondere durch Symmetrieebene E verläuft, und/oder bei einem Wechsel seiner Ausrichtung von der ersten Montageausrichtung A in die zweite Montageausrichtung B, in seiner Position relativ zum Fahrradrahmen, insbesondere innerhalb der Montageadapteraufnahme verändert wird. Das Befestigungsgegenmittel befindet sich in der ersten Montageausrichtung A optional an einer anderen Position in Bezug auf den Fahrradrahmen, insbesondere der Montageadapteraufnahme, als in der zweiten Montageausrichtung B.

Optional weist die Montageadapteraufnahme wenigstens eine Lagerwandung auf, gegen die der Montageadapter beim Kraftkoppeln mit dem ersten und/oder dem zweiten Bremssatteladapter, zum Festlegen derselben am Fahrradrahmen, gedrängt und/oder ortsfest gehalten wird. Diese Lagerwandung kann eine Wandung sein, die den Montageraum begrenzt. Insbesondere kann sie die Stirnseitenwand der als Sackloch ausgebildeten Montageadapteraufnahme sein.

Optional sind der Montageadapter und die Montageadapteraufnahme derart komplementär zueinander ausgebildet, dass beim Kraftkoppeln des Montageadapters mit dem ersten und/oder zweiten Bremssatteladapter, zum Festlegen derselben am Fahrradrahmen, eine Klemmbefestigung gebildet wird, über die die Lagerwandung zwischen dem Montageadapter und dem ersten bzw. zweiten Bremssatteladapter eingeklemmt wird. Beim Festlegen von Befestigungsmittel gegen Befestigungsgegenmittel wird optional eine Wandung des Fahrradrahmens eingeklemmt und so der Bremssatteladapter ortsfest am Fahrradrahmen gekoppelt. Die zwischen Befestigungsmittel und Befestigungsgegenmittel wirkende Kraft ist optional eine Zugkraft, die die Lagerwandung zwischen den besagten Bauteilen einklemmt. Insbesondere in diesem Zusammenhang ist es denkbar, dass der Montageadapter in der Montageadapteraufnahme rotationsfixiert geführt und insbesondere um eine Achse rotationsfixiert ist, die der Erstreckungsachse der Verbindung von Befestigungsgegenmitte und Befestigungsmittel entspricht. Bei der Ausbildung dieser Mittel als Schraub- oder dergleichen Verbindung, entspricht diese Erstreckungsachse optional der Achse der Schraube, die in die komplementäre Schraubenaufnahme bzw. ein Schraubgewinde eingeschraubt wird.

Optional weist die Montageadapteraufnahme wenigstens eine Ausnehmung, insbesondere eine Durchführung auf, durch die das Befestigungsmittel und/oder das Befestigungsgegenmittel zur gegenseitigen Kraftkopplung führbar ist. Eine solche Ausnehmung bzw. Durchführung kann beispielsweise in der Lagerwandung und/oder im Fahrradrahmen vorgesehen sein. Sie kann eine Außenseite des Fahrradrahmen mit dem Montageraum der Montagadapteraufnahme verbinden.

Optional weist die Montageadapteraufnahme eine Mehrzahl an solchen Ausnehmungen auf. Optional weist sie wenigstens eine erste Ausnehmung, insbesondere eine erste Durchführung, und wenigstens eine zweite Ausnehmung, insbesondere eine zweite Durchführung auf, wobei das Befestigungsmittel und/oder das Befestigungsgegenmittel, wenn der Montageadapter in der ersten Montageausrichtung in die Montageadapteraufnahme eingesetzt ist, zur gegenseitigen Kraftkopplung durch die erste Ausnehmung führbar ist, und, wenn der Montageadapter in der zweiten Montageausrichtung in die Montageadapteraufnahme eingesetzt ist, zur gegenseitigen Kraftkopplung durch die zweite Ausnehmung führbar ist, zur Kraftkopplung des Montageadapters mit dem ersten bzw. zweiten Bremssatteladapter, um diese am Fahrradrahmen festzulegen. Die erste Ausnehmung und die zweite Ausnehmung können mit einander verbunden sein, beispielsweise ein Langloch oder eine derartige geometrische Form aufweisen, dass ein Befestigungsmittel bzw. Befestigungsgegenmittel an unterschiedlichen Positionen durchgeführt werden kann, je nachdem, ob diese mit dem Montageadapter in der ersten oder zweiten Montageausrichtung verbunden werden sollen. Die Ausnehmungen können getrennte Ausnehmungen sein. Sie können in Bezug auf den Fahrradrahmen an unterschiedlichen Position ausgebildet sein.

Optional liegen das Befestigungsgegenmittel und/oder das Befestigungsmittel mit der jeweiligen Ausnehmung in Deckung, wenn der Montageadapter im Montageraum aufgenommen ist. Optional liegen das Befestigungsgegenmittel und/oder das Befestigungsmittel mit der Ausnehmung nicht in Deckung, wenn sich der Montageadapter im Einführbereich befindet. Optional ist die Ausnehmung derart ausgebildet, dass eine Kopplung zwischen Befestigungsgegenmittel und Befestigungsmittel nur dann möglich ist, wenn der Montageadapter sich in der Montageposition befindet. Optional liegt die erste Ausnehmung mit dem Befestigungsgegenmittel des Montageadapter nur in der ersten Montageausrichtung in Deckung, wenn der Montageadapter sich in der Montageposition befindet. Optional liegt die zweite Ausnehmung mit dem Befestigungsgegenmittel des Montageadapter nur in der zweiten Montageausrichtung in Deckung, wenn der Montageadapter sich in der Montageposition befindet.

Optional ist es denkbar, dass der Montageadapter wenigstens ein Positioniermittel aufweist, das in der Montageposition in wenigstens eine Ausnehmung eingreift, die nicht zur Kraftkopplung zwischen Befestigungsmittel und Befestigungsgegenmittel verwendet wird. Hier ist es beispielsweise denkbar, dass der Montageadapter ein Befestigungsmittel und benachbart dazu ein Positioniermittel aufweist, wobei in der ersten Montageausrichtung das Positioniermittel in die zweite Ausnehmung einragt bzw. mit dieser in positionierender Kraftkopplung steht und in der zweiten Montageausrichtung mit der ersten Ausnehmung in positionierender Kraftkopplung steht bzw. in diese einragt. Ein solches Positioniermittel kann als Vorsprung ausgebildet sein, der aus dem Montageadapter hervorsteht.

Optional gelten Befestigungsgegenmittel und ein solcher Positioniervorsprung nicht, wenn es um die Definition geht, wie der Montageadapter geometrisch ausgebildet ist, und insbesondere ob er spiegelsymmetrisch, rotationssymmetrisch et cetera ausgebildet ist.

Optional weist der Fahrradrahmen ein erstes Lagermittel, und die ersten und zweiten Bremssatteladapter jeweils ein erstes Lagergegenmittel auf, wobei der erste Bremssatteladapter mit seinem ersten Lagergegenmittel am ersten Lagermittel an einer ersten Lagerposition P₁ auflagerbar ist, wenn er über die Kraftkopplung mit dem Montageadapter am Fahrrad festgelegt wird, und der zweite Bremssatteladapter mit seinem ersten Lagergegenmittel an einer von der ersten Lagerposition P₁ verschiedenen, zweiten Lagerposition P₂ auflagerbar ist, wenn er über die Kraftkopplung mit dem Montageadapter am Fahrradrahmen festgelegt ist. Lagermittel und Lagergegenmittel können optional komplementär zueinander ausgebildete Lagerflächen sein. Optional sind die Lagermittel so ausgebildet, dass sie eine Normalkraftlagerung in Bezug auf die Krafteinleitungsrichtung beim Bremsvorgang bilden. Optional verläuft die Krafteinleitungsrichtung wenigstens abschnittsweise orthogonal zu der von Lagermittel und/oder Lagergegenmittel aufgespannten Ebene. Optional sind die Lagermittel so ausgebildet, dass sie eine Normalkraftlagerung in Bezug auf die zwischen Befestigungsmittel und Befestigungsgegenmittel wirkende Kopplungskraft bilden.

Lagermittel und Lagergegenmittel sind optional derart aneinander anordbar, dass eine temporäre Positionierung möglich ist, bevor Befestigungsmittel und Befestigungsgegenmittel miteinander gekoppelt werden.

Optional weist der Fahrradrahmen ein zweites Lagermittel, und die ersten und zweiten Bremssatteladapter jeweils ein zweites Lagergegenmittel auf, wobei der erste Bremssatteladapter mit seinem zweiten Lagergegenmittel am zweiten Lagermittel in einer dritten Lagerposition P₃ auflagerbar ist, wenn er über die Kraftkopplung mit dem Montageadapter am Fahrradrahmen festgelegt wird, und der zweite Bremssatteladapter mit seinem zweiten Lagergegenmittel am zweiten Lagermittel in derselben dritten Lagerposition P₃ auflagerbar ist, wenn er über die Kraftkopplung mit dem Montageadapter am Fahrradrahmen festgelegt wird. Das zweite Lagergegenmittel des jeweiligen Bremssatteladapters und das zweite Lagermittel des Fahrradrahmens bilden optional ein Schwenklager, sodass der jeweilige Bremssatteladapter um wenigstens eine Schwenkachse verschwenkt werden kann. Diese Schwenkachse verläuft optional in Richtung der Radachse und insbesondere einer Laufradachse, die am Ausfallende des Fahrradrahmens montierbar ist. Optional verläuft diese Schwenkachse koaxial zur Laufradachse. Optional sind der erste Bremssatteladapter und der zweite Bremssatteladapter, optional das erste Lagergegenmittel des ersten Bremssatteladapters und das erste Lagergegenmittel des zweiten Bremssatteladapter in unterschiedlichen Schwenkwinkeln um die Laufradachse in dieser dritten Lagerposition P₃ angeordnet, wenn sie am Fahrradrahmen festgelegt sind. Optional sind die beiden zweiten Lagergegenmittel des ersten Bremssatteladapters und des zweiten Bremssatteladapters identisch ausgebildet. Sie sind optional komplementär zu dem zweiten Lagermittel am Fahrradfahren ausgebildet. Unter Schwenkwinkel kann ein Winkel α, eingeschlossen zwischen der Haupterstreckungsachse A_{H} des Fahrrades und einer Lagerverbindungsachse A_{L}, die durch das zweite Lagermittel am Fahrradrahmen und ein Bremssattellager für den jeweiligen Bremssattel im Bereich der ersten Montagebereichs 200, optional im Bereich des ersten Lagermittels am ersten bzw. zweiten Bremssatteladapter, verläuft, verstanden werden.

Optional sind der erste Bremssatteladapter und der zweite Bremssatteladapter, und insbesondere das erste Lagergegenmittel des ersten Bremssatteladapters und das erste Lagergegenmittel des zweiten Bremssatteladapter derart unterschiedlich ausgebildet, dass ein am ersten Bremssatteladapter montierter erster Bremssattel an einer unterschiedlichen Position relativ zum Fahrradrahmen montierbar ist als der am zweiten Bremssatteladapter montierter erster und/oder ein zweiter Bremssattel.

Optional ist der erste Bremssatteladapter in Bezug auf seine Erstreckung ausgehend vom zweiten Lagergegenmittel länger oder kürzer ausgebildet, als der zweite Bremssatteladapter. Insbesondere ist optional der Abstand zwischen erstem Lagergegenmittel und zweitem Lagergegenmittel des ersten Bremssatteladapters geringer oder größer als der Abstand zwischen erstem Lagermittel und zweitem Lagermittel des zweiten Bremssatteladapters. Optional ist das erste Lagermittel des ersten Bremssatteladapters in Bezug auf seine Abmessungen größer oder kleiner, insbesondere in Bezug auf seine Erstreckungsrichtung in Krafteinleitungsrichtung höher oder niedriger ausgebildet, als das erste Lagermittel des zweiten Bremssatteladapters, sodass sich beim Festlegen der Bremssatteladapter am Fahrradrahmen eine andere Position der Bremssättel, optional ein anderer Schwenkwinkel ergibt. Optional ist das erste Lagermittel des ersten Bremssatteladapters in Bezug auf ein Orthogonale zur Lagergegenmittelverbindungsachse, optional eine Orthogonale zur Lagergegenmittelverbindungsachse, die in der Haupterstreckungsebene E_{H} verläuft, in seinen Abmessungen größer oder kleiner, insbesondere höher oder niedriger ausgebildet, als das erste Lagermittel des zweiten Bremssatteladapters, sodass sich beim Festlegen der jeweiligen Bremssättel am ersten und zweiten Bremssatteladapter am Fahrradrahmen eine andere Position derselben, und insbesondere in Bezug auf die Haupterstreckungsachse des Fahrrades unterschiedliche Verschwenkpositionen ergeben.

Es ist möglich, dass das zweite Lagermittel am Fahrradrahmen und das zweite Lagergegenmittel des ersten und/oder zweiten Bremssatteladapters ein Schwenklager bilden, über das der erste Bremssatteladapter und/oder der zweite Bremssatteladapter um eine Schwenkachse insbesondere die Laufradachse oder eine dazu achsparallel verlaufende Achse verschwenkbar am Fahrradrahmen festlegbar sind. Auf diese Weise ist es insbesondere möglich, die Montagelage eines am jeweiligen Bremssatteladapter montierten Bremssattels an unterschiedliche Bremsscheiben und insbesondere an Bremsscheiben mit unterschiedlichen Radien anzupassen.

Es ist denkbar, dass das zweite Lagermittel an der Laufradaufnahme am Fahrradrahmen und insbesondere an einer Achsaufnahme ausgebildet ist, in der das Laufrad mit seiner Laufradachse eingesetzt wird.

Es ist denkbar, dass das erste Lagermittel an einer Wandung des Fahrradrahmens ausgebildet ist, die der Lagerwandung der Montageadapteraufnahme abgewandt ist. Es ist denkbar, dass das erste Lagermittel ein Flächenlager bildet und die Lagerwandung ein Flächenlager bildet, wobei die aufgespannten Flächen des Lagermittels und der Lagerwandung ebenenparallel verlaufen.

Aus Redundanzgründen wird zu den besonderen Ausführungsformen der Bremsmittelmontageeinrichtung, des Bremsmittels und des Fahrrads nicht einzeln eingegangen, sondern auf sämtliche hier enthaltenen Passagen verwiesen, die mit diesen jeweiligen Vorrichtungen entsprechend ausbildbar und auch komplettierbar sind.

Weitere Ausführungsformen der Erfindung ergeben sich aus den Unteransprüchen.

Im Folgenden werden Ausführungsformen der Erfindung anhand der beiliegenden Zeichnungen näher erläutert. Hierbei zeigen:
- Fig. 1: eine Seitenansicht einer Ausführungsform des erfindungsgemäßen Fahrrades bzw. Fahrradrahmens;
- Figs. 2-6: unterschiedliche Darstellungen einer Ausführungsform des Fahrradrahmens gem. Fig. 1 bzw. Bremsmittels bei der Montage eines ersten Bremsmitteladapters;
- Fig. 7: eine Darstellung des Montageadapters gemäß Fig. 1 - 6 in einer ersten Montageausrichtung A;
- Figs. 8-11: weitere Detaildarstellungen des Fahrradrahmens gem. Fig. 1;
- Figs. 12: eine Darstellung der Ausführungsform des Fahrradrahmens gem. Fig. 1 bzw. Bremsmittels bei der Montage eines zweiten Bremsmitteladapters;
- Fig. 13: eine Darstellung des Montageadapters gemäß Fig. 12 in einer zweiten Montageausrichtung B;
- Figs. 14 und 15: weitere Darstellungen der Ausführungsform gem. Fig. 12;
- Figs. 16 und 17: weitere Darstellungen einer zweiten Ausführungsform des erfindungsgemäßen Fahrradrahmens;
- Fig. 18: eine Darstellung einer weiteren Ausführungsform des Montageadapters in einer ersten Montageausrichtung B;
- Figs. 19-21: Darstellungen der zweiten Ausführungsform des Fahrradrahmens gem. Figs. 16 und 17 bzw. des Bremsmittels bei der Montage eines ersten Bremssatteladapters;
- Fig. 22: eine Darstellungen der zweiten Ausführungsform des Fahrradrahmens gem. Figs. 16 und 17 bzw. des Bremsmittels bei der Montage eines zweiten Bremssatteladapters; und
- Fig. 23: eine Darstellung des Montageadapters gem. Fig. 18 in einer zweiten Montageausrichtung B.

Im Folgenden werden für gleiche und gleichwirkende Bauteile dieselben Bezugsziffern verwendet, wobei Hochindizes ihre Anwendung finden können.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

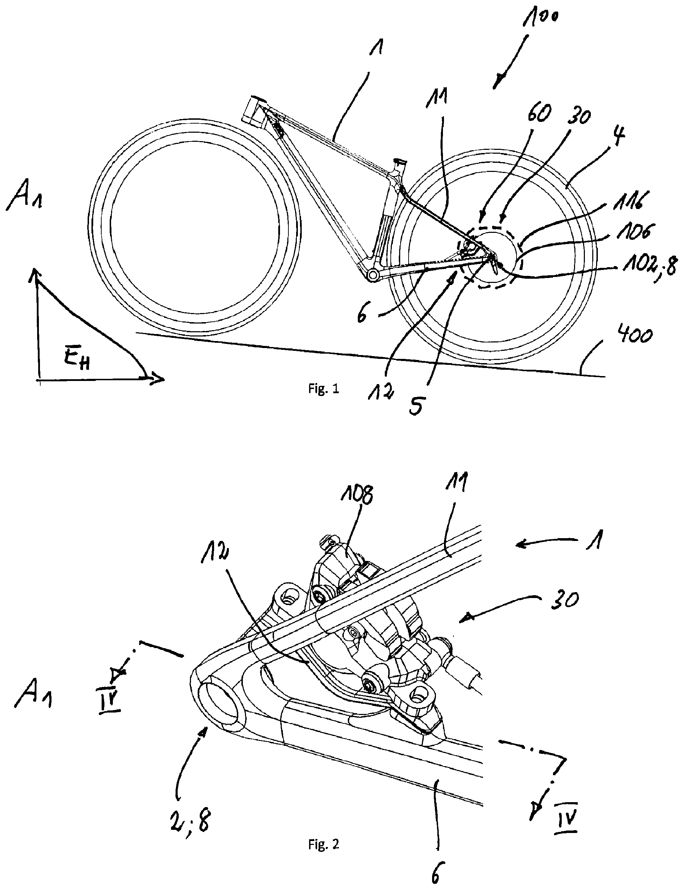

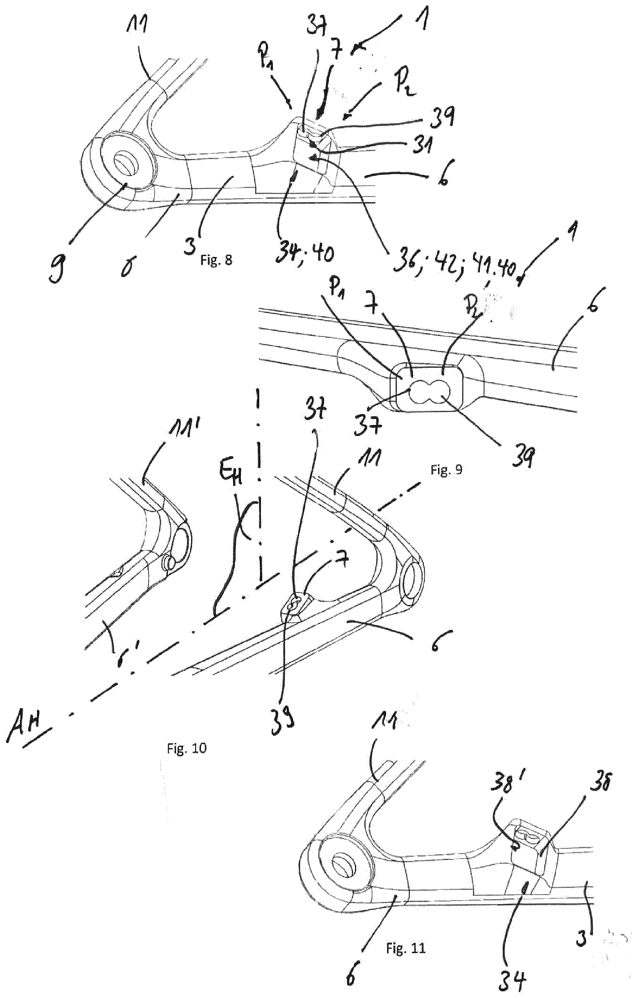

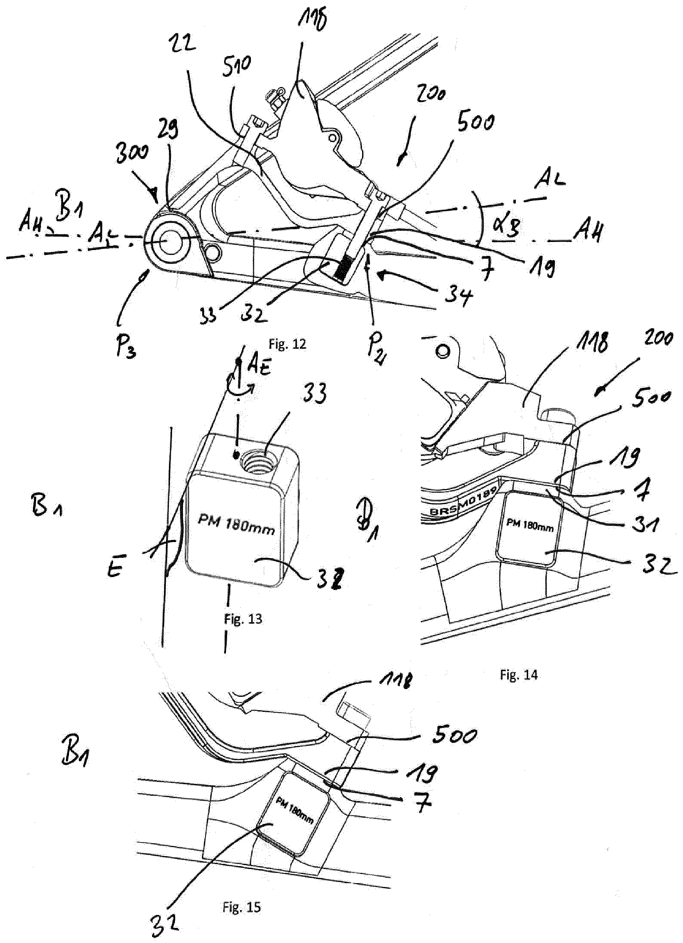

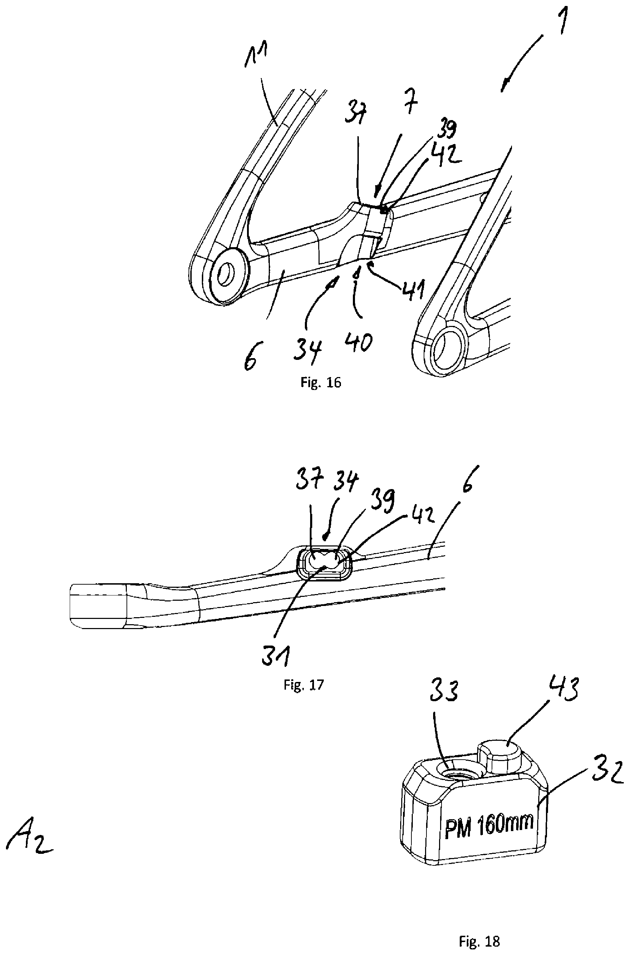

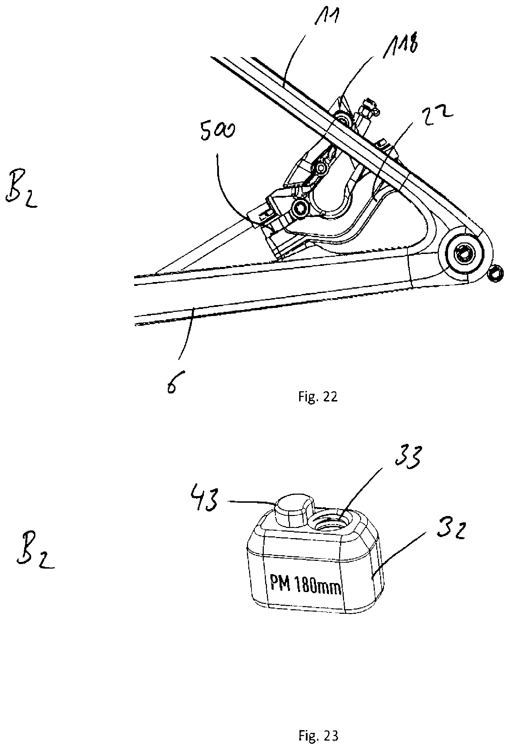

In den beiliegenden Zeichnungen sind unterschiedliche Montagezustände und Ausführungen zur Montage unterschiedlicher Bremssatteladapter 12, 22 an einem Fahrradrahmen 1 dargestellt. Die Figs. 2 bis 7 zeigen dabei eine Ausführung und Montage eines ersten Bremssatteladapters 12 (dieser Zustand wird hier mit dem Bezugszeichen A₁ dargestellt), die Figs. 12 bis 15 einen Montagezustand und eine Ausführung, bei der ein zweiter Bremssatteladapter 22 am Fahrradrahmen 1 montiert ist (dieser Zustand wird hier mit dem Bezugszeichen B₁ bezeichnet). Selbiges gilt für die zweite gezeigte Ausführungsform gemäß den Figs. 16 bis 23, wobei hier in den Figs. 11 bis 15 ein Montagezustand und eine Ausführung mit einem ersten Bremssatteladapter 12, und in den Figs. 22 und 23 ein Montagezustand und eine Ausführung mit einem zweiten Bremssatteladapter 22 dargestellt ist. Wie im Folgenden erläutert, unterscheiden sich die dargestellten Ausführungsformen A₁ und A₂, bzw. B₁ und B₂ u.a. durch die Ausbildung der Bremsmittelmontageeinrichtung 30, und insbesondere der Ausbildung eines Montageraumes und eines Montageadapters.

Fig. 1 zeigt eine erste Ausführungsform des erfindungsgemäßen Fahrradrahmens 1 bzw. eines Fahrrades 100, das mit einem solchen Fahrradrahmens 1 ausgerüstet ist. Am Fahrradrahmen 1 ist insbesondere ein Laufrad 4 angeordnet, das mit einer Laufradachse 5 an einer Laufradaufnahme 2 des Fahrradrahmens montiert ist. Die Laufradaufnahme 2 ist hier beispielsweise am Ausfallende 8 des Fahrradrahmens 1 angeordnet. In diesem Ausfallende können eine Kettenstrebe 6 und eine Sitzstrebe 11 zusammenlaufen, wobei hier in dem Punkt, in dem sich die beiden Streben treffen, die Laufradaufnahme 2 ausgebildet ist.

Am Fahrradrahmen 1 ist ein Bremsmittel 60 angeordnet, über das das Laufrad 4 und insofern das Fahrrad 100 in Betrieb gebremst werden kann. Das Bremsmittel 60 umfasst exemplarisch wenigstens einen ersten Bremssatteladapter 12, an dem wenigstens ein erster Bremssattel 108 montierbar ist. Dieser Bremssattel 108 ist dabei derart angeordnet, dass er mit einer Bremsscheibe 106 in Kraftkopplung bringbar ist, um das Laufrad 4 bei Bedarf abzubremsen. Der Fahrradrahmen 1 bzw. das Bremsmittel 60 umfassen darüber hinaus eine Bremsmittelmontageeinrichtung 30, die eine Anpassung von Bremssätteln, deren Position und Montageausrichtung an unterschiedliche Laufräder 4 bzw. daran befestigte Bremsscheiben 106; 116 erlaubt. Eine solche weitere, hier zweite Bremsscheibe 118, ist schematisch ebenfalls in Fig. 1 dargestellt.

Um eine solche flexible Ausrüstung eines Fahrrades 100 mit unterschiedlichen Bremssätteln und/oder Bremsscheiben und/oder Laufrädern zu ermöglichen, weist das Fahrrad 100, der Fahrradrahmen 1, das angesprochene Bremsmittel 60 und eine entsprechende Bremsmittelmontageeinrichtung 30 optional Folgendes auf. Es sei angemerkt, dass die hier beschriebenen Ausführungsformen eine Mehrzahl erfindungsgemäßer Merkmale aufweisen, die hier rein exemplarisch genannt sind. Es ist nicht zwingend erforderlich, dass alle diese Merkmale bei einer Ausführungsform vorhanden sind. In diesem Zusammenhang wird insbesondere auf die vorhergehenden Passagen der Beschreibung verwiesen, wo sämtliche Merkmale für sich getrennt beschrieben und deren zwingende Abhängigkeiten, wenn gegeben, erläutert sind. Zudem wir auf dazugehörigen Ansprüche verwiesen, in der diese Merkmale ebenfalls für sich alleine oder in einer notwendigen Kombination aufgeführt sind.

Der erfindungsgemäße Fahrradrahmen umfasst eine Bremsmittelmontageeinrichtung 30, zur wahlweisen Montage entweder des ersten Bremssatteladapters 12, oder eines, von diesem ersten Bremssatteladapter 12 verschiedenen zweiten Bremssatteladapters 22, wobei am ersten Bremssatteladapter 12 wenigstens ein erster Bremssattel 108 und am zweiten Bremssatteladapter 22 wenigstens der erste Bremssattel 108 und/oder ein insbesondere vom ersten Bremssattel 108 verschiedener, zweiter Bremssattel 118 montierbar ist. Eine Montagesituation, in der ein erster Bremssatteladapter 12 und ein erster Bremssattel 108 am Fahrradrahmen 1 montiert sind, ist beispielsweise in den Figs. 2 bis 4 dargestellt. Eine Montagesituation, in der ein zweiter Bremssatteladapter 22 und ein zweiter Bremssattel 118 am Fahrradrahmen 1 montiert sind, ist beispielsweise in den Figs. 12, 14 und 15 dargestellt. Der zweite Bremssattel 118 kann ganz grundsätzlich zum ersten Bremssattel 108 verschieden aber auch identisch sein.

Erkennbar ist, dass durch die unterschiedliche Ausbildung der Bremssatteladapter 108 und 118, der darauf montierte Bremssattel 108, 118 in unterschiedlichen Positionen, insbesondere relativ zur Laufradaufnahme 2 angeordnet ist. Dies erlaubt es, den jeweiligen Bremssattel 108, 118 mit korrespondierenden Bremsscheiben 106, 116 in Kraftkopplung zu bringen, was wiederum bedeutet, dass auf sehr einfache Weise ein Laufrad 4 mit unterschiedlichen Bremsscheiben 106, 116 ausgerüstet und am Fahrradrahmen 1 verbaut werden kann. Auch ist es auf diese Weise möglich, eine Anpassung des Bremssattels 108, 118 bei einer gleichbleibenden am Laufrad 4 verbauten Bremsscheibe 106, 116 vorzunehmen, wenn also beispielsweise ein veränderter Bremssattel mit gleicher Bremsscheibe in Wirkverbindung treten soll. Wie im Folgenden im Detail beschrieben, kann aufgrund der erfindungsgemäßen Bremsmittelmontageeinrichtung eine Anpassung von Bremssattel und Bremsscheibe bzw. Bremssatteladapter sehr einfach vorgenommen werden.

Die Figs. 2 bis 15 zeigen eine erste Ausführungsform, bei der exemplarisch zwei verschiedene Bremssatteladapter 12 (siehe Figs. 2-5) und 22 (siehe Figs. 12, 14 und 15) am Fahrradrahmen 1 montiert werden. Beide Bremssatteladapter 12, 22 weisen dazu einen ersten Montagebereich 200 und einen zweiten Montagebereich 300 auf, über die sie am Fahrradrahmen 1 festgelegt werden können.

Auf den Bremssatteladaptern sind dann jeweils wenigstens ein Bremssattel 108, 118 montierbar. Es können unterschiedliche, aber auch die gleichen Bremssättel sein. Jeder Bremssatteladapter weist dazu Bremssattellager 500, 510 auf, auf denen der jeweilige zu montierende Bremssattel auflagerbar und am Bremssatteladapter festlegbar ist. Dies kann über geeignete Befestigungsvorrichtungen, bspw. Schraubverbindungen geschehen. Selbiges ist aus dem Stand der Technik bekannt.

Der jeweilige zweite Montagebereich 300 ist hier exemplarisch derart ausgebildet, dass er eine Montage des jeweiligen Bremssatteladapters 12, 22 am Ausfallende 8 des Fahrradrahmens 1 erlauben. Bei dieser Ausführungsform ist der zweite Montagebereich 300 so ausgebildet, dass er über die Laufradachse 5 des Laufrades 4 am Fahrradrahmen ortsfest gehalten wird.

Zur Montage der jeweiligen Bremssatteladapter 12, 22 im zweiten Montagebereich 300, und hier beispielsweise am Ausfallende 8, weist der Fahrradrahmen 1 ein zweites Lagermittel 9 auf. Korrespondierend dazu weisen die ersten und zweiten Bremssatteladapter 12, 22 jeweils ein zweites Lagergegenmittel 27, 29 auf. Der erste Bremssatteladapter 12 ist dabei mit diesem zweiten Lagergegenmittel 27 am zweiten Lagermittel 9 in einer sogenannten dritten Lagerposition P₃ auflagerbar. Der zweite Bremssatteladapter 22 ist mit seinem zweiten Lagergegenmittel 29 am zweiten Lagermittel 9 in derselben dritten Lagerposition P₃ auflagerbar. Bei dieser Ausführungsform sind optional also die beiden Lager in der Montageposition 300 für die Bremssatteladapter 12, 22 identisch, optional, wie hier dargestellt, durch die Laufradachse 5 definiert. Über die Laufradachse werden die ersten und zweiten Bremssatteladapter 12, 22 optional am Ausfallende gehalten.

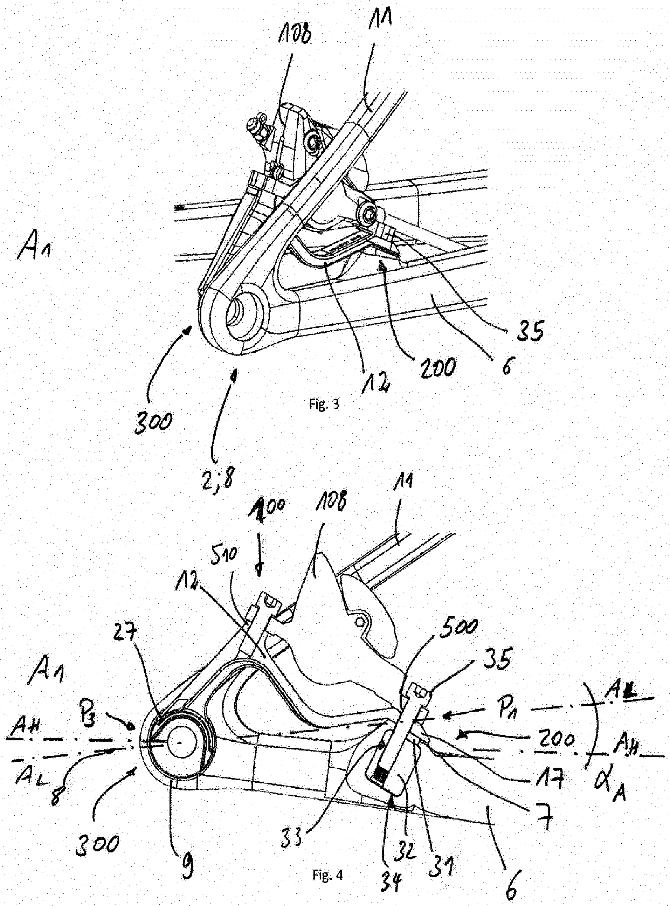

Das zweite Lagermittel 9 und das zweite Lagergegenmittel 19 bzw. 29 des ersten Bremssatteladapters 12 und/oder des zweiten Bremssatteladapters 22 können dabei ein Schwenklager bilden, über das der erste Bremssatteladapter 12 und/oder der zweite Bremssatteladapter 22 um eine Schwenkachse, und wie hier dargestellt insbesondere um die Kaufradachse 5 oder eine dazu achsparallel verlaufende Achse verschwenkbar am Fahrradrahmen festlegbar sind. Die dabei jeweils eingenommenen Schwenkwinkel sind in den Figs. 4 und 12 mit α₁ und α₂ gekennzeichnet. Bei dieser Ausführungsform sind die Schwenkwinkel α₁ und α₂ unterschiedlich, da, wie im Folgenden noch beschrieben, die Bremssattellager 500 des ersten 12 und zweiten Bremssatteladapters 22 (im Bereich der ersten Montagebereichs 200), zur Montage der Bremssättel 108, 118 unterschiedlich ausgebildet sind.

Zur Montage der jeweiligen Bremssatteladapter 12, 22 insbesondere im ersten Montagebereich 200, umfasst der erfindungsgemäße Fahrradrahmen und die weiteren hier erfindungsgemäß offenbarten Vorrichtungen die Bremsmittelmontageeinrichtung 30, die die wahlweise Montage entweder eines ersten Bremssatteladapters 12 oder eines vom ersten Bremssatteladapters 12 verschiedenen zweiten Bremssatteladapters 22 erlaubt, wobei am ersten Bremssatteladapter 12 wenigstens ein erster Bremssattel 108 und am zweiten Bremssatteladapter 22 wenigstens der erste und/oder ein zweiter, vom ersten Bremssattel 108 insbesondere verschiedener Bremssattel 118 montierbar ist.

Die Bremsmittelmontageeinrichtung 30 weist dazu einen Montageadapter 32 und eine Montageadapteraufnahme 34 auf. Der Montageadapter 34 ist dabei derart am Fahrradahmen 1 ausgebildet, dass darin der Montageadapter 32 lösbar festlegbar ist. Dies ist in zwei Montageausrichtungen, nämlich in einer ersten Montageausrichtung A und in einer zweiten, von der ersten Montageausrichtung A verschiedenen, Montageausrichtung B möglich. Wie bereits erwähnt sind diese beiden Montageausrichtungen in den Figs. durch die Bezugszeichen A bzw. B und die jeweiligen Indizes 1 und 2 für die hier dargestellten zwei verschiedenen Ausführungsformen gekennzeichnet.

In der ersten Montageausrichtung A ist der erste Bremssatteladapter 12 über eine Kraftkopplung mit dem Montageadapter 32 am Fahrradrahmen 1 festlegbar. In der zweiten Montageausrichtung B ist der zweite Bremssatteladapter 22 über eine Kraftkopplung mit dem Montageadapter 32 am Fahrradrahmen 1 festlegbar.

Der Montageadapter kann auch so ausgebildet sein, dass mehr als zwei unterschiedliche Bremssatteladapter am Fahrradrahmen festlegbar sind.

Der Montageadapter kann dabei integral am Fahrrad ausgebildet sein, wie dies bei den hier dargestellten Ausführungsformen exemplarisch gezeigt ist.

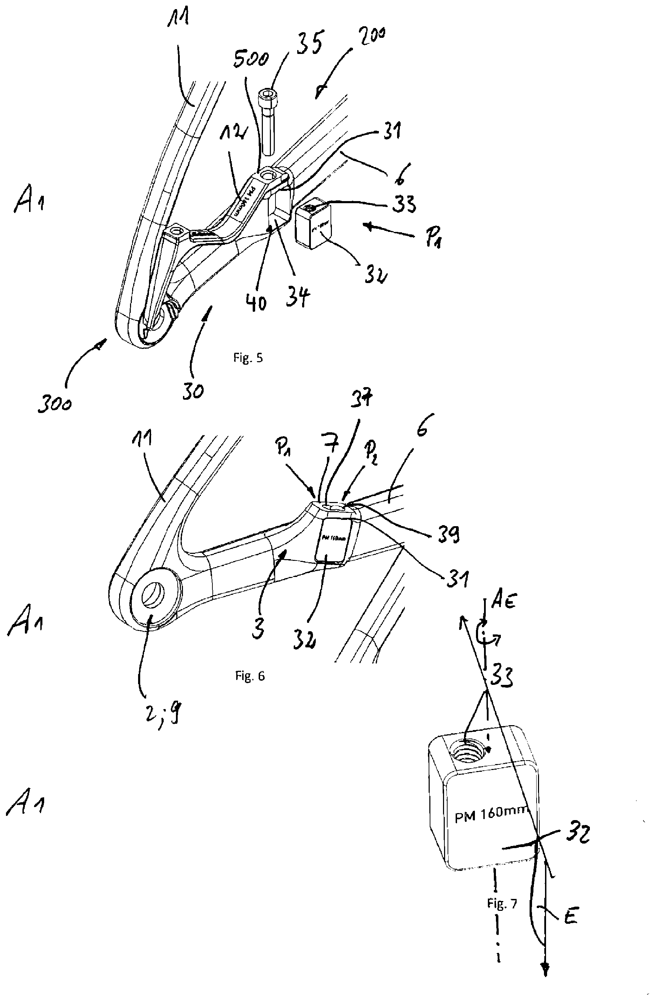

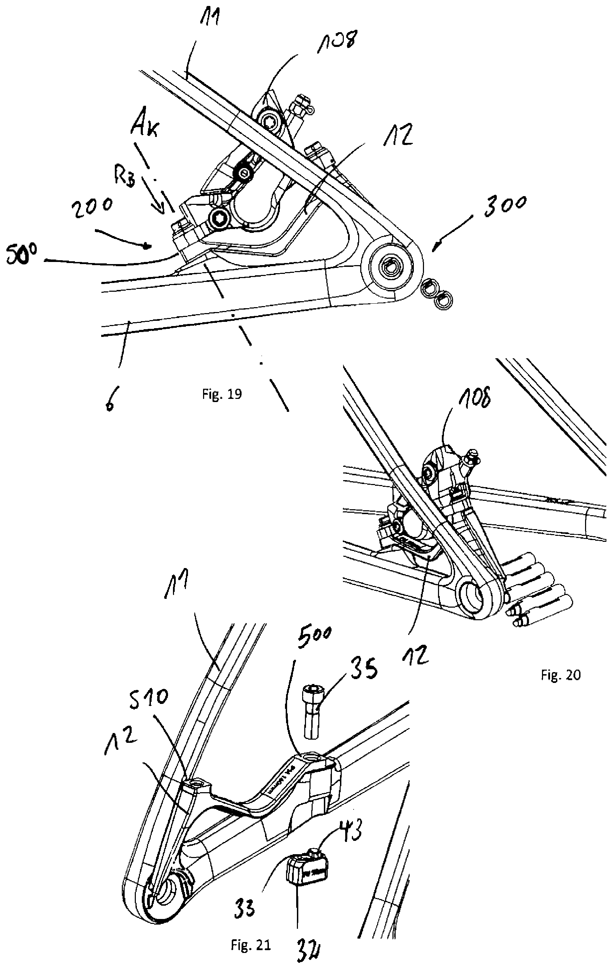

Insbesondere wie in den Figs. 8 bis 11 gezeigt, kann die Montageadapteraufnahme einen Aufnahmeraum 36 aufweisen, der von wenigstens zwei Seiten, weiter optional von wenigstens drei Seiten eingegrenzt ist. In diesen Aufnahmeraum 36 kann der Montageadapter 32 über eine Einführöffnung 40 sowohl in der ersten als auch in der zweiten Montageausrichtung eingesetzt und festgelegt werden. An der Montageadapteraufnahme 34 kann dazu ein Einführbereich 41 vorgesehen sein, der die Einführöffnung 40 aufweist (siehe Fig. 11). An diesen Einführbereich 41 schließt optional ein Montageraum 42 an, in dem der Montageadapter 32 positioniert ist, wenn er am Fahrradrahmen zur Montage des jeweiligen Bremssatteladapters 12, 22 festgelegt ist. Es ist denkbar, dass die Einführöffnung 40 derart am Fahrradrahmen 1 und insbesondere an einer Wandung 3 des Fahrradrahmens angeordnet ist, dass sie in eine Richtung weist, die vom ersten und zweiten Bremssatteladapter weg zeigt, wenn diese am Fahrradrahmen montiert sind. Dies erschließt sich insbesondere aus der Kombination der Figs. 4 und 6. So ist es möglich, dass die Einführöffnung 40 in Bezug auf eine Haupterstreckungsebene E_{H} des Fahrradrahmens 1 (siehe Fig. 1, hier verläuft die Haupterstreckungsebene E_{H} in Blattebene und mittig zwischen den beispielsweise in Fig. 10 dargestellten Ausfallenden 2, 2) in einem Winkel zwischen 70 Grad und 110 Grad, optional 90 Grad zur Seite zeigt). Alternativ oder in Ergänzung ist es möglich, dass die Einführöffnung im Wesentlichen entgegengesetzt der Richtung des Bremssatteladapters zeigt. Dies ist beispielsweise bei der zweiten Ausführungsform gemäß den Figs. 19 bis 23 der Fall. In Bezug auf den in Fig. 1 dargestellten Boden 400 kann es sein, dass die Einführöffnung im Wesentlichen nach unten, also in Richtung des Bodens 400 und/oder horizontal dazu verläuft.

Die Montageadapteraufnahme 34 und der Montageadapter 32 können derart komplementär geometrisch zueinander ausgebildet sein, dass der Montageadapter 32 in der ersten und/oder in der zweiten Montageausrichtung in einer definierten Montageposition in der Montageadapteraufnahme 34 positionierbar ist, optional in ein und derselben Montageposition. Dies ist bei der hier dargestellten Ausführungsform der Fall (siehe im Detail dazu Figs. 6 und 14).

Wie in den Figs. 7 und 13 exemplarisch dargestellt, ist es möglich, dass der Montageadapter 32 in Bezug auf wenigstens eine Symmetrieebene E derart symmetrisch ausgebildet ist, dass er durch eine räumliche Ausrichtungsänderung relativ zur Montageadapteraufnahme 34 von der ersten Montageausrichtung A in die zweite Montageausrichtung B, und wieder zurück, gebracht werden kann. Bei der hier dargestellten Ausführungsform, ist der Montageadapter 32 spiegelsymmetrisch zur Ebene E ausgebildet. Dabei ist zu beachten, dass bei dieser Definition am Montageadapter ausgebildete Befestigungsmittel, insbesondere das hier dargestellte Befestigungsgegenmittel 33, oder der hier dargestellte Vorsprung 43, vernachlässigt werden kann.

Der Montageadapter 32 kann so ausgebildet sein, dass er durch eine Rotation um die Erstreckungsachse A_{E} rotiert werden kann und dann entweder eine komplementär zur Befestigungsadapteraufnahme 34 ausgebildete erste Montageausrichtung A oder zweite Montageausrichtung B aufweist. In beiden Montageausrichtungen kann er optional passgenau in die Montageadapteraufnahme 34 und insbesondere in den Montageraum 42 eingeführt werden.

Wie insbesondere in Fig. 11 dargestellt, kann die Montageadapteraufnahme 34 Führungselemente 38 aufweisen, die den Montageadapter 32 in der ersten Montageausrichtung A und/oder der zweiten Montageausrichtung B beim Einsetzen in die Montageadapteraufnahme 34 und/oder im eingesetzten Zustand, in Bezug auf den Fahrradrahmen 1 führen, optional in dieser positionieren, weiter optional in ein und derselben Montageposition positionieren. Dies ist bei der dargestellten Ausführungsform der Fall. Die Seitenwände 38 dienen als Führungselemente und auch als Positionierungselemente für den Montageadapter. Zudem bilden sie optional wenigstens abschnittsweise, den Aufnahmeraum 36.

Optional ist der Montageadapter 32 hier wenigstens abschnittweise, und insbesondere in einem Bereich, in dem er entlang wenigstens einer, insbesondere zwei Achsen ortsfest im Montageraum, insbesondere durch die Führungselemente 38 der Montageadapteraufnahme, positioniert wird, nicht rotationssymmetrisch ausgebildet. Er weist weiter optional Anstehflächen auf, die nach dem Einführen des Montageadapters in den Montageraum und/oder den Einführbereich, eine Rotation des Montageadapters verhindern. Diese Anstehflächen werden hier durch die Führungselemente 38, insbesondere also Wandungen der Montageadapteraufnahme 34 gebildet. Der Montageadapter ist so ausgebildet, dass er in Bezug auf den Montageraum 42 lediglich axial und insbesondere entlang einer Achse, insbesondere der Krafteinleitungsachse und/oder einer Kraftwirkungsachse eines Befestigungsmittels/Befestigungsgegenmittel zu dessen Festlegung im Montageraum geführt werden kann.

Der Montageadapter 32 kann wenigstens ein Befestigungsgegenmittel 33 aufweisen, das hier exemplarisch als Schraubinnengewinde aufweist. Mit diesem Befestigungsgegenmittel 33, kann er mit einem Befestigungsmittel 35 (in Fig. 5 exemplarisch als Schraube 35 dargestellt) am ersten bzw. am zweiten Bremssatteladapter kraftgekoppelt werden, um den jeweiligen Bremssatteladapter mit dem Montageadapter kraftzukoppeln und am Fahrradrahmen festzulegen.

Es ist denkbar, dass das Befestigungsgegenmittel 33, wenn der Montageadapter 32 in der ersten Montageausrichtung A in die Montageadapteraufnahme 34 eingesetzt ist, mit einem ersten Befestigungsmittel 35, am ersten Bremssatteladapter 12 kraftkoppelbar ist, zur Festlegung des ersten Bremssatteladapters 12 am Fahrradrahmen 1, und, wenn der Montageadapter 32 in der zweiten Montageausrichtung B in die Montageadapteraufnahme 34 eingesetzt ist mit diesem ersten Befestigungsmittel 35 oder einem zweiten Befestigungsmittel, am zweiten Bremssatteladapter 22 kraftkoppelbar ist, zur Festlegung des zweiten Bremssatteladapters 22 am Fahrradrahmen 1.

Das Befestigungsgegenmittel 33 des Montageadapters 32 kann, wenn der Montageadapter in der ersten Montageausrichtung A in die Montageadapteraufnahme 34 eingesetzt ist, relativ zum Fahrradrahmen 1 an einer anderen Stelle positioniert sein, als wenn der Montageadapter in der zweiten Montageausrichtung B in die Montageadapteraufnahme 34 eingesetzt ist. Dies wird insbesondere durch die Figs. 4 und 12 deutlich.

Zur Festlegung des Montageadapters bzw. des Bremssatteladapters 12, 22 am Fahrradrahmen 1, wird bei dieser Ausführungsform beispielsweise eine Klemmbefestigung ausgebildet.

Die Montageadapteraufnahme 34 kann dazu wenigstens eine Lagerwandung 31 aufweisen, gegen die der Montageadapter 32 beim kraftkoppeln mit dem ersten Bremssatteladapter 12 und/oder dem zweiten Bremssatteladapter 22 zum Festlegen desselben am Fahrradrahmen 1 gedrängt und ortsfest gehalten wird. Diese Lagerwandung 31 kann optional Teil des Fahrradrahmens 1 sein.

Zur Ausbildung der Klemmbefestigung sind der Montageadapter 32 und die Montageadapteraufnahme 34 optional derart komplementär zueinander ausgebildet, dass beim Kraftkoppeln des Montageadapters 32 mit dem ersten Bremssatteladapter 12 und/oder zweiten Bremssatteladapter 22, der Montageadapter 32 gegen die Lagerwandung 31 der Montageadapteraufnahme 34 gezogen, und diese zwischen Montageadapter 32 und Bremssatteladapter 22 eingeklemmt wird.

Zur Kraftkopplung zwischen Bremssatteladapter 12, 22 und Montageadapter 32, weist die Montageadapteraufnahme 34 wenigstens eine Ausnehmung, bei dieser Ausführungsform zwei Ausnehmungen 37, 39 auf, durch die das Befestigungsmittel 35 und/oder das Befestigungsgegenmittel 33 zur gegenseitigen Kraftkopplung führbar ist. Bei dieser Ausführungsform wird das Befestigungsmittel 35, also die Schraube, durch die jeweiligen ersten und zweiten Ausnehmungen 37, 39 geführt und mit dem Montageadapter 32 gekoppelt bzw. in diesen eingeschraubt. Je nach Montageausrichtung des Montageadapters 32 wird dabei die Schraube 35 durch die erste Ausnehmung 37 (Montageausrichtung A) oder die zweite Ausnehmung 39 (Montageausrichtung B) geführt.

Bei dieser Ausführungsform ist der Abstand zwischen Ausfallende 8 und Schraube bzw. Befestigungsgegenmittel 33 in der Montageausrichtung A geringer als in der Montageausrichtung B. Auch ist optional der Abstand zwischen dem ersten Montagebereich 200 und dem zweiten Montagebereich 300 beim ersten Bremssatteladapter 12 geringer als beim zweiten Bremssatteladapter 22. Korrespondierend dazu ist optional der am ersten Bremssatteladapter 12 montierte erste Bremssattel 108 in Bezug u.a. auf die Laufradaufnahme an einer anderen Position gelagert als der am zweiten Bremssatteladapter 22 montierte zweite Bremssattel 118. Es ist möglich, die Bremssatteladapter derart unterschiedlich auszubilden, dass wenigstens ein darauf montierter Bremssattel, in Bezug auf die am Laufrad montierte Bremsscheibe bzw. das Ausfallende, an unterschiedlichen Positionen in Bezug auf den Fahrradrahmen gelagert ist. U.a. kann so die Position des Bremssattels aber auch die unterschiedlicher Bremssättel relativ zu, insbesondere unterschiedlichen Bremsscheiben und weiter insbesondere an unterschiedliche Bremsscheibendurchmesser angepasst werden.

Neben dem zuvor erwähnten zweiten Lagermittel 9 am Fahrradrahmen 1, und hier am Ausfallende 8, kann der Fahrradrahmen 1 ein erstes Lagermittel 7, und die ersten und zweiten Bremssatteladapter 12, 22 jeweils ein korrespondierendes, erstes Lagergegenmittel 17, 19 aufweisen. Diese sind vorzugsweise im ersten Montagebereich 200 angeordnet. Der erste Bremssatteladapter 12 kann mit seinem ersten Lagergegenmittel 17 am ersten Lagermittel 7 an einer ersten Lagerposition P₁ aufgelagert werden (siehe Fig. 4). Der zweite Bremssatteladapter 22 kann mit seinem ersten Lagergegenmittel 19 am ersten Lagermittel 7 an einer, von der ersten Lagerposition P₁ verschiedenen, zweiten Lagerposition P₂ aufgelagert werden (siehe Fig. 12). Bei dieser Ausführungsform ist das erste Lagermittel 7 an einer Wandung 3 des Fahrradrahmens 1 ausgebildet, die der Lagerwandung 31 abgewandt ist.

Die Figs. 19 bis 23 zeigen eine zweite Ausführungsform des erfindungsgemäßen Fahrradrahmens, der Bremsmittelmontageeinrichtung, des Bremsmittels bzw. eines entsprechenden Fahrrades, die zu der in den Figs. 2 bis 15 dargestellten Ausführungsform im Wesentlichen identisch ist. Jedoch ist bei dieser zweiten Ausführungsform der Bereich um die Montagemittelaufnahme 34 und der Montageadapter 32 unterschiedlich aufgebaut.

So weist die Montageadapteraufnahme 34 bei dieser Ausführungsform zwar wieder eine Einführöffnung 40 auf, die an einen Einführbereich 41 anschließt, der wiederum an einen Montagebereich 42 anschließt, die Einführöffnung 40 weist bei dieser Ausführungsform jedoch im Wesentlichen vom montierten Bremssatteladapter bzw. Bremssattel weg; in Bezug auf den in Fig. 1 definierten Boden, also nach unten. Ein Teilbereich der Einführöffnung 41 weist optional auch bei dieser Ausführungsform zur Seite und insbesondere in Richtung der Haupterstreckungsebene des Fahrrades 100 (siehe Fig. 1). In diese Montageadapteraufnahme kann bei dieser Ausführungsform der Montageadapter 32 von unten eingeführt werden. Der seitliche Öffnungsbereich erlaubt optional eine ergänzende Schwenkbewegung beim Einsetzten.

Bei dieser Ausführungsform weist der Montageadapter 32 neben dem Befestigungsgegenmittel 33, hier einem Schraubinnengewinde, einen Vorsprung 43 auf, der als Positioniervorsprung in eine der am Fahrradrahmen ausgeführten Ausnehmungen 37, 39 eingeführt werden kann. Wenn der Montageadapter 32 in der Montageausrichtung A in die Montageadapteraufnahme eingeführt ist, kann er bei dieser Ausführungsform über das Befestigungsmittel 35 am Fahrradrahmen 1 unter Eingriff in das Befestigungsgegenmittel 33 kraftgekoppelt werden. Dazu wird das Befestigungsmittel durch die Ausnehmung 37 geführt. In diesem Zustand kann der Vorsprung 43 in die nicht benutzte Aufnahme 39 eingreifen. In der Montageausrichtung B ist das in umgekehrter Orientierung möglich. Hier wird der Montageadapter 32 über das Befestigungsmittel 35 festgelegt, das durch die Ausnehmung 39 geführt wird. Der Vorsprung 43 greift dann in die Ausnehmung 39 ein. Der Vorsprung 43 ist optional so ausgebildet, dass er nicht über das am Fahrradrahmen ausgebildete erste Lagermittel 7 hervorsteht.

Fig. 19 zeigt exemplarisch eine Krafteinleitungsachse A_{K}, entlang derer Lagerkräfte über den Bremssattel 108, 118 auf den ersten Montagebereich 200 wirken, wenn Bremskräfte auf das Fahrrad 1 bzw. dessen Laufrad 4 einwirken. Bei einem Bremsvorgang wirken hier Kräfte entsprechend der Kraftrichtung R_{B}.

### Bezugszeichen

- 1: Fahrradrahmen
- 2: Laufradaufnahme
- 3: Wandung
- 4: Laufrad
- 5: Laufradachse
- 6: Kettenstrebe
- 7: erstes Lagermittel
- 8: Ausfallende
- 9: zweites Lagermittel
- 11: Sitzstrebe
- 12: erster Bremssatteladapter
- 17: erstes Lagergegenmittel
- 19: erstes Lagergegenmittel
- 22: zweiter Bremssatteladapter
- 27: zweites Lagergegenmittel
- 29: zweites Lagergegenmittel
- 30: Bremsmittelmontageeinrichtung
- 31: Lagerwandung
- 32: Montageadapter
- 33: Befestigungsgegenmittel
- 34: Montageadapteraufnahme
- 35: Befestigungsmittel
- 36: Aufnahmeraum
- 37: erste Ausnehmung
- 38: Führungselement
- 39: zweite Ausnehmung
- 40: Einführöffnung
- 41: Einführbereich
- 42: Montageraum
- 43: Vorsprung
- 60: Bremsmittel
- 100: Fahrrad
- 106: erste Bremsscheibe
- 108: erster Bremssattel
- 116: zweite Bremsscheibe
- 118: zweiter Bremssattel
- 200: erster Montagebereich
- 300: zweiter Montagebereich
- 400: Boden
- 500: Bremssattellager
- 510: Bremssattellager
- A₁: erste Montageausrichtung Ausführungsform 1
- A₂: erste Montageausrichtung Ausführungsform 2
- A_{L}: Lagerverbindungsachse
- A_{E}: Erstreckungsachse
- A_{K}: Krafteinleitungsachse
- B₁: zweite Montageausrichtung Ausführungsform 1
- B₂: zweite Montageausrichtung Ausführungsform 2
- E: Symmetrieebene
- E_{H}: Haupterstreckungsebene
- P₁: erste Lagerposition
- P₂: zweite Lagerposition
- P₃: dritte bzw. gemeinsame Lagerposition

## Patentansprüche

1. Fahrradrahmen, umfassend
eine Bremsmittelmontageeinrichtung (30), zur wahlweisen Montage entweder eines ersten Bremssatteladapters (12) oder eines, vom ersten Bremssatteladapter verschiedenen zweiten Bremssatteladapters (22), wobei am ersten Bremssatteladapter (12) wenigstens ein erster Bremssattel (108), und am zweiten Bremssatteladapter (22) wenigstens der erste Bremssattel (108) und/oder wenigstens ein, insbesondere vom ersten Bremssattel (108) verschiedener zweiter Bremssattel (118) montierbar ist;
**dadurch gekennzeichnet, dass**
die Bremsmittelmontageeinrichtung (30) einen Montageadapter (32) und eine Montageadapteraufnahme (34) umfasst, wobei die Montageadapteraufnahme (34) derart am Fahrradrahmen (1) ausgebildet ist, dass darin der Montageadapter (32) lösbar festlegbar ist, und zwar entweder in einer ersten Montageausrichtung (A) oder in wenigstens einer, von der ersten Montageausrichtung (A) verschiedenen zweiten Montageausrichtung (B);
wobei in der ersten Montageausrichtung (A) der erste Bremssatteladapter (12) über eine Kraftkopplung mit dem Montageadapter (32) am Fahrradrahmen (1) festlegbar ist, und
in der zweiten Montageausrichtung (B) der zweite Bremssatteladapter (22) über eine Kraftkopplung mit dem Montageadapter (32) am Fahrradrahmen (1) festlegbar ist.

2. Fahrradrahmen nach Anspruch 1,
**dadurch gekennzeichnet, dass**
die Montageadapteraufnahme (34) integral am Fahrradrahmen (1) ausgebildet ist.

3. Fahrradrahmen nach Anspruch 1 oder 2,
**dadurch gekennzeichnet, dass**
die Montageadapteraufnahme (34) einen, optional von wenigstens zwei Seiten, weiter optional von wenigstens drei Seiten eingegrenzten Aufnahmeraum (36) aufweist, in die der Montageadapter (32) über eine Einführöffnung (40) sowohl in der ersten (A) als auch in der zweiten Montageausrichtung (B) einsetzbar und darin festlegbar ist.

4. Fahrradrahmen nach Anspruch 3
**dadurch gekennzeichnet, dass**
die Einführöffnung (40) derart am Fahrradrahmen (1), optional in einer Wandung (3) des Fahrradrahmens (1) angeordnet ist, dass sie in eine Richtung weist, die vom ersten (12) und/oder zweiten Bremssatteladapter (22) weg zeigt, wenn diese am Fahrradrahmen montiert sind, optional in einer im Wesentlichen entgegengesetzten Richtung zeigt und/oder optional in Bezug auf eine Haupterstreckungsebene (E_{H}) des Fahrradrahmens (1) in einem Winkel zwischen 70° und 110°, optional 90° zur Seite zeigt.

5. Fahrradrahmen nach einem der vorhergehenden Ansprüche,
**dadurch gekennzeichnet, dass**
die Montageadapteraufnahme (34) wenigstens abschnittsweise als Sackloch ausgebildet ist.

6. Fahrradrahmen nach einem der vorhergehenden Ansprüche,
**dadurch gekennzeichnet, dass**
die Montageadapteraufnahme (34) und der Montageadapter (32) derart komplementär geometrisch zueinander ausgebildet sind, dass der Montageadapter (32) in der ersten (A) und/oder in der zweiten Montageausrichtung (B) in einer definierten Montageposition in der Montageadapteraufnahme positionierbar ist, optional in ein und derselben Montageposition positionierbar ist.

7. Fahrradrahmen nach einem der vorhergehenden Ansprüche,
**dadurch gekennzeichnet, dass**
der Montageadapter (32), insbesondere in Bezug auf wenigstens eine Symmetrieebene (E), wenigstens abschnittsweise derart symmetrisch ausgebildet ist, dass er durch eine räumliche Ausrichtungsänderung relativ zur Montageadapteraufnahme (34), beispielsweise durch eine Rotation, optional durch eine 180°-Rotation, um wenigstens eine Erstreckungsachse (A_{E}), die insbesondere durch diese Symmetrieebene (E) verläuft, von der ersten Montageausrichtung (A) in die zweite Montageausrichtung (B) gebracht werden kann.

8. Fahrradrahmen nach einem der vorhergehenden Ansprüche,
**dadurch gekennzeichnet, dass**
die Montageadapteraufnahme (34) Führungselemente (38) aufweist, die den Montageadapter (32) in der ersten Montageausrichtung (A) und der zweiten Montageausrichtung (B) beim Einsetzten in die Montageadapteraufnahme (34) und/oder im eingesetzten Zustand, in Bezug auf den Fahrradrahmen (1) führen, optional in dieser positionieren, weiter optional in ein und derselben Montageposition positionieren.

9. Fahrradrahmen nach einem der vorhergehenden Ansprüche,
**dadurch gekennzeichnet, dass**
der Montageadapter (32) wenigstens ein Befestigungsgegenmittel (33), beispielsweise ein Schraubinnengewinde, aufweist, das mit jeweils wenigstens einem Befestigungsmittel (35), beispielsweise einer Schraube, am ersten (12) bzw. am zweiten Bremssatteladapter (22) kraftkoppelbar ist, um den jeweiligen Bremssatteladapter mit dem Montageadapter kraftzukoppeln und am Fahrradrahmen (1) festzulegen.

10. Fahrradrahmen nach Anspruch 9,
**dadurch gekennzeichnet, dass**
das Befestigungsgegenmittel (33), wenn der Montageadapter (32) in der ersten Montageausrichtung (A) in die Montageadapteraufnahme (34) eingesetzt ist, mit einem ersten Befestigungsmittel (35), am ersten Bremssatteladapter (12) kraftkoppelbar ist, zur Festlegung des ersten Bremssatteladapters (12) am Fahrradrahmen (1), und, wenn der Montageadapter (32) in der zweiten Montageausrichtung (B) in die Montageadapteraufnahme (34) eingesetzt ist mit diesem ersten Befestigungsmittel (35) oder einem zweiten Befestigungsmittel, am zweiten Bremssatteladapter (22) kraftkoppelbar ist, zur Festlegung des zweiten Bremssatteladapters (22) am Fahrradrahmen (1).

11. Fahrradrahmen nach einem der Ansprüche 9 oder 10,
**dadurch gekennzeichnet, dass**
das Befestigungsgegenmittel (33), wenn der Montageadapter (32) in der ersten Montageausrichtung (A) in die Montageadapteraufnahme (34) eingesetzt ist, relativ zum Fahrradrahmen (1) an einer anderen Stelle positioniert ist als wenn dieser in der zweiten Montageausrichtung (B) in die Montageadapteraufnahme (34) eingesetzt ist.

12. Fahrradrahmen nach einem der vorhergehenden Ansprüche,
**dadurch gekennzeichnet, dass**
die Montageadapteraufnahme (34) wenigstens eine Lagerwandung (31) aufweist, gegen die der Montageadapter (32) beim Kraftkoppeln mit dem ersten (12) und/oder dem zweiten Bremssatteladapter (22), zum Festlegen derselben am Fahrradrahmen (1), gedrängt und/oder ortsfest gehalten wird.

13. Fahrradrahmen nach Anspruch 12,
**dadurch gekennzeichnet, dass**
der Montageadapter (32) und die Montageadapteraufnahme (34), derart komplementär zueinander ausgebildet sind, dass beim Kraftkoppeln des Montageadapters (32) mit dem ersten (12) und/oder zweiten Bremssatteladapter (22), zum Festlegen derselben am Fahrradrahmen (1), eine Klemmbefestigung gebildet wird, über die die Lagerwandung (31) zwischen dem Montageadapter (32) und dem ersten (12) bzw. zweiten Bremssatteladapter (22) eingeklemmt wird.

14. Fahrradrahmen nach einem der Ansprüche 9 bis 13,
**dadurch gekennzeichnet, dass**
die Montageadapteraufnahme (34) wenigstens eine Ausnehmung (37; 39), insbesondere eine Durchführung aufweist, durch die das Befestigungsmittel (35) und/oder das Befestigungsgegenmittel (33) zur gegenseitigen Kraftkopplung führbar ist.

15. Fahrradrahmen nach einem der Ansprüche 9 bis 14,
**dadurch gekennzeichnet, dass**
die Montageadapteraufnahme (34) wenigstens eine erste Ausnehmung (37), insbesondere eine erste Durchführung, und wenigstens eine zweite Ausnehmung (39), insbesondere eine zweite Durchführung aufweist, wobei das Befestigungsmittel (35) und/oder das Befestigungsgegenmittel (33), wenn der Montageadapter (32) in der ersten Montageausrichtung (A) in die Montageadapteraufnahme (34) eingesetzt ist, zur gegenseitigen Kraftkopplung durch die erste Ausnehmung (37) führbar ist, und, wenn der Montageadapter (32) in der zweiten Montageausrichtung (A) in die Montageadapteraufnahme (34) eingesetzt ist, zur gegenseitigen Kraftkopplung durch die zweite Ausnehmung (39) führbar ist, zur Kraftkopplung des Montageadapters (32) mit dem zweiten Bremssatteladapter (22), um diese am Fahrradrahmen festzulegen.

16. Fahrradrahmen nach einem der vorhergehenden Ansprüche,
**dadurch gekennzeichnet, dass**
der Fahrradrahmen (1) ein erstes Lagermittel (7), und die ersten (12) und zweiten Bremssatteladapter (22) jeweils ein erstes Lagergegenmittel (17; 19) aufweisen, wobei
der erste Bremssatteladapter (12) mit seinem ersten Lagergegenmittel (17) am ersten Lagermittel (7) an einer ersten Lagerposition (P₁) auflagerbar ist, wenn er über die Kraftkopplung mit dem Montageadapter (32) am Fahrrad (1) festgelegt wird, und
der zweite Bremssatteladapter (12) mit seinem ersten Lagergegenmittel (19) am ersten Lagermittel (7) an einer, von der ersten Lagerposition (P₁) verschiedenen, zweiten Lagerposition (P₂) auflagerbar ist, wenn er über die Kraftkopplung mit dem Montageadapter (32) am Fahrradrahmen (1) festgelegt wird.

17. Fahrradrahmen nach einem der vorhergehenden Ansprüche,
**dadurch gekennzeichnet, dass**
der Fahrradrahmen (1) ein zweites Lagermittel (9), und die ersten (12) und zweiten Bremssatteladapter (22) jeweils ein zweites Lagergegenmittel (27; 29) aufweisen, wobei
der erste Bremssatteladapter (12) mit seinem zweiten Lagergegenmittel (27) am zweiten Lagermittel (9) in einer dritten Lagerposition (P₃) auflagerbar ist, wenn er über die Kraftkopplung mit dem Montageadapter (32) am Fahrradrahmen (1) festgelegt wird, und
der zweite Bremssatteladapter (22) mit seinem zweiten Lagergegenmittel (29) am zweiten Lagermittel (9) in derselben dritten Lagerposition (P3) auflagerbar ist, wenn er über die Kraftkopplung mit dem Montageadapter (32) am Fahrradrahmen (1) festgelegt wird.

18. Fahrradrahmen nach Anspruch 17,
**dadurch gekennzeichnet, dass**
das zweite Lagermittel (9) und das zweite Lagergegenmittel (19; 29) des ersten (12) und/oder zweiten Bremssatteladapters (22) ein Schwenklager bilden, über das der erste Bremssatteladapter (12) und/oder der zweite Bremssatteladapter (22) um eine Schwenkachse, insbesondere die Laufradachse oder eine dazu achsparallel verlaufenden Achse verschwenkbar am Fahrradrahmen (1) festlegbar sind.

19. Fahrradrahmen nach Anspruch 16,
**dadurch gekennzeichnet, dass**
das erste Lagermittel an einer Wandung des Fahrradrahmens (1) ausgebildet ist, die der Lagerwandung abgewandt ist.

20. Bremsmittelmontageeinrichtung, zur Montage entweder eines ersten Bremssatteladapters (12) oder eines, vom ersten Bremssatteladapter verschiedenen zweiten Bremssatteladapters (22), an denen jeweils wenigsten ein Bremssattel montierbar ist, an einem Fahrradrahmen (1), insbesondere an einem Fahrradrahmen nach einem der Ansprüche 1 bis 19, wobei die Bremsmittelmontageeinrichtung (30) einen Montageadapter (32) derart aufweist, dass dieser in einer Montageadapteraufnahme (34) am Fahrradrahmen (1) lösbar festlegbar ist, und zwar entweder in einer ersten Montageausrichtung (A) oder in einer, von der ersten Montageausrichtung (A) verschiedenen zweiten Montageausrichtung (B);
wobei in der ersten Montageausrichtung (A) der erste Bremssatteladapter (12) über eine Kraftkopplung mit dem Montageadapter (32) am Fahrradrahmen (1) festlegbar ist, und
in der zweiten Montageausrichtung (B) der zweite Bremssatteladapter (22) über eine Kraftkopplung mit dem Montageadapter (32) am Fahrradrahmen (1) festlegbar ist.

21. Bremsmittel, zur Montage an einem Fahrradrahmen (1), insbesondere nach einem der Ansprüche 1 bis 19, umfassend wenigstens einen ersten Bremssatteladapter (12) und wenigstens einen daran befestigbaren ersten Bremssattel (108), weiter umfassend
einen Montageadapter (32) derart, dass dieser in einer Montageadapteraufnahme (34) am Fahrradrahmen (1) lösbar festlegbar ist, und zwar entweder in einer ersten Montageausrichtung (A) oder in wenigstens einer, von der ersten Montageausrichtung (A) verschiedenen zweiten Montageausrichtung (B);
wobei in der ersten Montageausrichtung (A) der erste Bremssatteladapter (12) über eine Kraftkopplung mit dem Montageadapter (32) am Fahrradrahmen (1) festlegbar ist, und
in der zweiten Montageausrichtung (B) ein zweiter, vom ersten Bremssatteladapter (12) verschiedener Bremssatteladapter (22), zur Montage wenigstens des ersten Bremssattels (108) und/oder eines, insbesondere vom ersten Bremssattel (108) verschiedenen zweiten Bremssattels (118), über eine Kraftkopplung mit dem Montageadapter (32) am Fahrradrahmen (1) festlegbar ist.

22. Fahrrad, umfassend einen Fahrradrahmen (1) nach einem der Ansprüche 1 bis 19, weiter umfassend
wenigstens ein rotierbares Laufrad (4), mit einer ersten Bremsscheibe (106), und ein Bremsmittel gemäß Anspruch 21.

## Claims

1. Bicycle frame, comprising
a brake means mounting device (30), for selectively mounting either a first brake calliper adapter (12) or a second brake calliper adapter (22) different from the first brake calliper adapter, wherein at least one first brake calliper (108) can be mounted on the first brake calliper adapter (12), and at least the first brake calliper (108) and/or at least one second brake calliper (118) in particular different from the first brake calliper (108), can be mounted on the second brake calliper adapter (22);
**characterised in that**
the brake means mounting device (30) comprises a mounting adapter (32) and a mounting adapter receptacle (34), wherein the mounting adapter receptacle (34) is formed on the bicycle frame (1) such that the mounting adapter (32) can be detachably fixed therein, and this either in a first mounting orientation (A) or in at least one second mounting orientation (B) different from the first mounting orientation (A);
wherein in the first mounting orientation (A), the first brake calliper adapter (12) can be fixed to the bicycle frame (1) via a force coupling with the mounting adapter (32), and
in the second mounting orientation (B), the second brake calliper adapter (22) can be fixed to the bicycle frame (1) via a force coupling with the mounting adapter (32).

2. Bicycle frame according to claim 1,
**characterised in that**
the mounting adapter receptacle (34) is integrally formed on the bicycle frame (1).

3. Bicycle frame according to claim 1 or 2,
**characterised in that**
the mounting adapter receptacle (34) has a receptacle space (36) optionally delimited by at least two sides, further optionally delimited by at least three sides, in which the mounting adapter (32) can be inserted via an insertion opening (40) both in the first (A) and in the second mounting orientation (B) and can be fixed therein.

4. Bicycle frame according to claim 3
**characterised in that**
the insertion opening (40) is arranged on the bicycle frame (1), optionally in a wall (3) of the bicycle frame (1), such that it points in a direction that points away from the first (12) and/or second brake calliper adapter (22) when they are mounted on the bicycle frame, optionally points in a substantially opposite direction and/or optionally points at an angle between 70° and 110°, optionally 90°, to the side with respect to a main extension plane (E_{H}) of the bicycle frame (1).

5. Bicycle frame according to any one of the preceding claims,
**characterised in that**
the mounting adapter receptacle (34) is designed as a blind hole at least in sections.

6. Bicycle frame according to any one of the preceding claims,
**characterised in that**
the mounting adapter receptacle (34) and the mounting adapter (32) are designed geometrically complement each other in such a way that the mounting adapter (32) can be positioned in the first mounting orientation (A) and/or in the second mounting orientation (B) in a defined mounting position in the mounting adapter receptacle, optionally in one and the same mounting position.

7. Bicycle frame according to any one of the preceding claims,
**characterised in that**
the mounting adapter (32) is symmetrically designed, in particular with respect to at least one symmetry plane (E), at least in sections such that it can be brought into the second mounting orientation (B) from the first mounting orientation (A) by means of a spatial change in orientation relative to the mounting adapter receptacle (34), for example by a rotation, optionally by a 180° rotation, about at least one extension axis (A_{E}), which runs in particular through this symmetry plane (E).

8. Bicycle frame according to any one of the preceding claims,
**characterised in that**
the mounting adapter receptacle (34) has guide elements (38) which guide the mounting adapter (32) in the first mounting orientation (A) and the second mounting orientation (B) when inserted into the mounting adapter receptacle (34) and/or in the inserted state, with respect to the bicycle frame (1), optionally position it in this mounting position, optionally position it further in one and the same mounting position.

9. Bicycle frame according to any one of the preceding claims,
**characterised in that**
the mounting adapter (32) has at least one fastening counter-means (33), for example a female screw thread, which can be force-coupled with in each case at least one fastening means (35), for example a screw, on the first (12) or on the second brake calliper adapter (22) in order to force-couple the respective brake calliper adapter with the mounting adapter and fix it to the bicycle frame (1).

10. Bicycle frame according to claim 9,
**characterised in that**
the mounting counter-means (33), if the mounting adapter (32) is inserted in the first mounting orientation (A) into the mounting adapter receptacle (34), can be force coupled to the first brake calliper adapter (12) with a first fastening means (35), for securing the first brake calliper adapter (12) to the bicycle frame (1), and, if the mounting adapter (32) is inserted in the second mounting orientation (B) into the mounting adapter receptacle (34) can be force-coupled with this first fastening means (35) or a second fastening means, to the second brake calliper adapter (22), for securing the second brake calliper adapter (22) to the bicycle frame (1).

11. Bicycle frame according to any one of claims 9 or 10,
**characterised in that**
the fastening counter-means (33) is positioned at a different location relative to the bicycle frame (1) when the mounting adapter (32) is inserted in the first mounting orientation (A) into the mounting adapter mount (34) than when it is inserted in the second mounting orientation (B) into the mounting adapter mount (34).

12. Bicycle frame according to any one of the preceding claims,
**characterised in that**
the mounting adapter receptacle (34) has at least one bearing wall (31) against which the mounting adapter (32) is pressed and/or held in place during force coupling with the first (12) and/or the second brake calliper adapter (22), for securing the latter on the bicycle frame (1).

13. Bicycle frame according to claim 12,
**characterised in that**
the mounting adapter (32) and the mounting adapter receptacle (34) are designed to be complementary to each other in such a way that, when the mounting adapter (32) is force-coupled with the first (12) and/or second brake calliper adapter (22), a clamp fastening is formed for securing the same to the bicycle frame (1), via which the bearing wall (31) is clamped between the mounting adapter (32) and the first (12) or second brake calliper adapter (22).

14. Bicycle frame according to any one of claims 9 to 13,
**characterised in that**
the mounting adapter receptacle (34) has at least one recess (37; 39), in particular a feed-through which the fastening means (35) and/or the fastening counter-means (33) can be guided for mutual force coupling.

15. Bicycle frame according to any one of claims 9 to 14,
**characterised in that**
the mounting adapter receptacle (34) has at least one first recess (37), in particular a first feed-through, and at least one second recess (39), in particular a second feed-through, wherein the fastening means (35) and/or the fastening counter-means (33), when the mounting adapter (32) is inserted in the first mounting orientation (A) into the mounting adapter receptacle (34), can be guided through the first recess (37) for mutual force coupling, and, if the mounting adapter (32) is inserted in the second mounting orientation (A) into the mounting adapter mount (34), can be guided for mutual force coupling through the second recess (39), for force coupling of the mounting adapter (32) with the second brake calliper adapter (22), in order to fix it to the bicycle frame.

16. Bicycle frame according to any one of the preceding claims,
**characterised in that**
the bicycle frame (1) has a first bearing means (7), and the first (12) and second brake calliper adapters (22) each have a first bearing counter-means (17; 19), wherein
the first brake calliper adapter (12) can be supported with its first bearing counter-means (17) on the first bearing means (7) at a first bearing position (P₁) if it is fixed to the bicycle (1) via the force coupling with the mounting adapter (32), and
the second brake calliper adapter (12) can be supported with its first bearing counter-means (19) on the first bearing means (7) at a second bearing position (P₂) different from the first bearing position (P₁) if it is fixed to the bicycle frame (1) via the force coupling with the mounting adapter (32).

17. Bicycle frame according to any one of the preceding claims,
**characterised in that**
the bicycle frame (1) has a second bearing means (9), and the first (12) and second brake calliper adapters (22) each have a second bearing counter-means (27; 29), wherein
the first brake calliper adapter (12) with its second bearing counter-means (27) can be supported on the second bearing means (9) in a third bearing position (P₃) if it is fixed to the bicycle frame (1) via the force coupling with the mounting adapter (32), and
the second brake calliper adapter (22) with its second bearing counter-means (29) can be supported on the second bearing means (9) in the same third bearing position (P₃) if it is fixed to the bicycle frame (1) via the force coupling with the mounting adapter (32).

18. Bicycle frame according to claim 17,
**characterised in that**
the second bearing means (9) and the second bearing counter-means (19; 29) of the first (12) and/or second brake calliper adapter (22) form a pivot bearing, via which the first brake calliper adapter (12) and/or the second brake calliper adapter (22) can be pivotably fixed on the bicycle frame (1) about a pivot axis, in particular the running wheel axle or an axle running parallel thereto.

19. Bicycle frame according to claim 16,
**characterised in that**
the first bearing means is formed on a wall of the bicycle frame (1) which is facing away from the bearing wall.

20. Brake means mounting device, for mounting either a first brake calliper adapter (12) or a second brake calliper adapter (22) different from the first brake calliper adapter, on which in each case at least one brake calliper can be mounted, on a bicycle frame (1), in particular on a bicycle frame according to any one of claims 1 to 19, wherein the brake means mounting device (30) has a mounting adapter (32) such that this can be detachably fixed in a mounting adapter receptacle (34) on the bicycle frame (1), specifically either in a first mounting orientation (A) or in a second mounting orientation (B) different from the first mounting orientation (A);
wherein in the first mounting orientation (A), the first brake calliper adapter (12) can be fixed to the bicycle frame (1) via a force coupling with the mounting adapter (32), and
in the second mounting orientation (B), the second brake calliper adapter (22) can be fixed to the bicycle frame (1) via a force coupling with the mounting adapter (32).

21. Brake means, for mounting on a bicycle frame (1), in particular according to any one of claims 1 to 19, comprising at least one first brake calliper adapter (12) and at least one first brake calliper (108) attachable thereto, further comprising
a mounting adapter (32) such that it can be detachably fixed in a mounting adapter receptacle (34) on the bicycle frame (1), specifically either in a first mounting orientation (A) or in at least one second mounting orientation (B) different from the first mounting orientation (A);
wherein in the first mounting orientation (A), the first brake calliper adapter (12) can be fixed to the bicycle frame (1) via a force coupling with the mounting adapter (32), and
in the second mounting orientation (B), a second brake calliper adapter (22) different from the first brake calliper adapter (12) can be fixed for mounting at least the first brake calliper (108) and/or a second brake calliper (118), in particular different from the first brake calliper (108), via a force coupling with the mounting adapter (32) on the bicycle frame (1).

22. Bicycle, comprising a bicycle frame (1) according to any one of claims 1 to 19, further comprising
at least one rotatable wheel (4), with a first brake disc (106), and a brake means according to claim 21.

## Revendications

1. Cadre de bicyclette comprenant
un dispositif de montage de moyen de freinage (30) pour le montage, au choix, soit d'un premier adaptateur d'étrier de frein (12), soit d'un deuxième adaptateur d'étrier de frein (22) différent du premier adaptateur d'étrier de frein, au moins un premier étrier de frein (108) pouvant être monté sur le premier adaptateur d'étrier de frein (12) et au moins le premier étrier de frein (108) et/ou au moins un deuxième étrier de frein (118), en particulier différent du premier étrier de frein (108), peut(vent) être monté(s) sur le deuxième adaptateur d'étrier de frein (22) ;
**caractérisé en ce que** le dispositif de montage de moyen de freinage (30) comprend un adaptateur de montage (32) et un logement de l'adaptateur de montage (34), le logement de l'adaptateur de montage (34) étant formé sur le cadre de bicyclette (1) de telle sorte que l'adaptateur de montage (32) peut y être fixé de manière amovible, soit dans une première orientation de montage (A), soit dans au moins une deuxième orientation de montage (B) différente de la première orientation de montage (A) ;
le premier adaptateur d'étrier de frein (12) pouvant, dans la première orientation de montage (A), être fixé au cadre de bicyclette (1) par couplage par force avec l'adaptateur de montage (32), et
le deuxième adaptateur d'étrier de frein (22) pouvant, dans la deuxième orientation de montage (B), être fixé au cadre de bicyclette (1) par l'intermédiaire d'un couplage par force avec l'adaptateur de montage (32).

2. Cadre de bicyclette selon la revendication 1,
**caractérisé en ce que** le logement de l'adaptateur de montage (34) est formé d'un seul tenant sur le cadre de bicyclette (1).

3. Cadre de bicyclette selon la revendication 1 ou 2,
**caractérisé en ce que**
le logement de l'adaptateur de montage (34) présente un espace de logement (36) délimité, facultativement, par au moins deux côtés, et facultativement, par au moins trois côtés, dans lequel l'adaptateur de montage (32) peut être inséré et fixé via une ouverture d'insertion (40) aussi bien dans la première orientation de montage (A) que dans la deuxième orientation de montage (B).

4. Cadre de bicyclette selon la revendication 3
**caractérisé en ce que** l'ouverture d'insertion (40) est agencée sur le cadre de bicyclette (1), facultativement dans une paroi (3) du cadre de bicyclette (1), de telle sorte qu'elle est orientée dans une direction qui s'éloigne du premier (12) et/ou du deuxième adaptateur d'étrier de frein (22) lorsque ceux-ci sont montés sur le cadre de bicyclette, facultativement dans une direction sensiblement opposée et/ou facultativement par rapport à un plan d'extension principal (E_{H}) du cadre de bicyclette (1) selon un angle compris entre 70° et 110°, facultativement de 90° sur le côté.

5. Cadre de bicyclette selon l'une des revendications précédentes,
**caractérisé en ce que** le logement de l'adaptateur de montage (34) est réalisé au moins en partie sous forme de trou borgne.

6. Cadre de bicyclette selon l'une des revendications précédentes, **caractérisé en ce que** le logement de l'adaptateur de montage (34) et l'adaptateur de montage (32) sont conçus de manière géométriquement complémentaire l'un par rapport à l'autre, de telle sorte que l'adaptateur de montage (32) peut être positionné dans la première (A) et/ou dans la deuxième orientation de montage (B) dans une position de montage définie dans le logement de l'adaptateur de montage, facultativement dans une seule et même position de montage.

7. Cadre de bicyclette selon l'une des revendications précédentes, **caractérisé en ce que** l'adaptateur de montage (32), en particulier par rapport à au moins un plan de symétrie (E), est conçu de manière symétrique au moins par sections, de telle sorte qu'il peut être déplacé dans l'espace par rapport
au logement de l'adaptateur de montage (34), par exemple par une rotation, facultativement par une rotation de 180°, afin de faire passer au moins un axe d'extension (A_{E}) qui s'étend en particulier à travers ce plan de symétrie (E), de la première orientation de montage (A) dans la deuxième orientation de montage (B).

8. Cadre de bicyclette selon l'une des revendications précédentes,
**caractérisé en ce que** le logement de l'adaptateur de montage (34) comprend des éléments de guidage (38) qui guident l'adaptateur de montage (32) dans la première orientation de montage (A) et dans la deuxième orientation de montage (B) lors de l'insertion dans le logement de l'adaptateur de montage (34) et/ou à l'état inséré, par rapport au cadre de bicyclette (1) et le positionnent facultativement dans cette position, et facultativement dans une seule et même position de montage.

9. Cadre de bicyclette selon l'une des revendications précédentes,
**caractérisé en ce que** l'adaptateur de montage (32) comprend au moins un moyen de fixation opposé (33), par exemple un filetage intérieur, qui peut être couplé par couplage par force avec au moins un moyen de fixation (35), par exemple une vis, sur le premier (12) ou le deuxième adaptateur d'étrier de frein (22) afin de coupler par couplage par force l'adaptateur d'étrier de frein respectif avec l'adaptateur de montage et de le fixer sur le cadre de bicyclette (1).

10. Cadre de bicyclette selon la revendication 9,
**caractérisé en ce que** le moyen de fixation opposé (33), lorsque l'adaptateur de montage (32) est inséré dans le logement de l'adaptateur de montage (34) dans la première orientation de montage (A), peut être couplé par couplage par force à un premier moyen de fixation (35) sur le premier adaptateur d'étrier de frein (12) pour fixer le premier adaptateur d'étrier de frein (12) sur le cadre de bicyclette (1), et, lorsque l'adaptateur de montage (32) est inséré dans le logement de l'adaptateur de montage (34) dans la deuxième orientation de montage (B), peut être couplé par couplage de force avec ce premier moyen de fixation (35) ou un deuxième moyen de fixation, sur le deuxième adaptateur d'étrier de frein (22) pour fixer le deuxième adaptateur d'étrier de frein (22) sur le cadre de bicyclette (1).

11. Cadre de bicyclette selon l'une des revendications 9 ou 10,
**caractérisé en ce que** le moyen de fixation opposé (33), lorsque l'adaptateur de montage (32) est inséré dans le logement de l'adaptateur de montage (34) dans la première orientation de montage (A), est positionné par rapport au cadre de bicyclette (1) à un autre endroit que lorsqu'il est inséré dans le logement de l'adaptateur de montage (34) dans la deuxième orientation de montage (B).

12. Cadre de bicyclette selon l'une des revendications précédentes,
**caractérisé en ce que** le logement de l'adaptateur de montage (34) comprend au moins une paroi de palier (31) contre laquelle l'adaptateur de montage (32), lors du couplage par force avec le premier (12) et/ou le deuxième adaptateur d'étrier de frein (22), est poussé et/ou maintenu en position fixe sur le cadre de bicyclette (1) afin de le fixer.

13. Cadre de bicyclette selon la revendication 12,
**caractérisé en ce que** l'adaptateur de montage (32) et le logement de l'adaptateur de montage (34) sont conçus de manière complémentaire l'un par rapport à l'autre, de telle sorte que lors du couplage par force de l'adaptateur de montage (32) avec le premier (12) et/ou le deuxième adaptateur d'étrier de frein (22), une fixation par serrage est formée pour la fixation de ceux-ci sur le cadre de bicyclette (1), par l'intermédiaire de laquelle la paroi de palier (31) est coincée entre l'adaptateur de montage (32) et le premier (12) ou le deuxième adaptateur d'étrier de frein (22).

14. Cadre de bicyclette selon l'une des revendications 9 à 13,
**caractérisé en ce que** le logement de l'adaptateur de montage (34) présente au moins un évidement (37 ; 39), en particulier un passage, à travers lequel le moyen de fixation (35) et/ou le moyen de fixation opposé (33) peut(vent) être guidé(s) pour un couplage par force réciproque.

15. Cadre de bicyclette selon l'une des revendications 9 à 14,
**caractérisé en ce que** le logement de l'adaptateur de montage (34) comprend au moins un premier évidement (37), en particulier un premier passage, et au moins un deuxième évidement (39), en particulier un deuxième passage, le moyen de fixation (35) et/ou le moyen de fixation opposé (33) pouvant être guidé(s) à travers le premier évidement (37) pour un couplage par force réciproque lorsque l'adaptateur de montage (32) est inséré dans le logement de l'adaptateur de montage (34) dans la première orientation de montage (A), et pouvant être guidé(s) pour un couplage par force réciproque à travers le deuxième évidement (39) lorsque l'adaptateur de montage (32) est inséré dans le logement de l'adaptateur de montage (34) dans la deuxième orientation de montage (A), pour le couplage par force de l'adaptateur de montage (32) avec le deuxième adaptateur d'étrier de frein (22) afin de fixer ceux-ci sur le cadre de bicyclette.

16. Cadre de bicyclette selon l'une des revendications précédentes, **caractérisé en ce que** le cadre de bicyclette (1) comprend un premier moyen de palier (7), et les premier (12) et deuxième adaptateurs d'étrier de frein (22) comprennent chacun un premier moyen de contre-palier (17 ; 19),
le premier adaptateur d'étrier de frein (12) pouvant être appuyé avec son premier moyen de contre-palier (17) sur le premier moyen de palier (7) dans une première position d'appui (P₁) lorsqu'il est fixé à la bicyclette (1) par couplage par force avec l'adaptateur de montage (32), et
le deuxième adaptateur d'étrier de frein (12) pouvant être appuyé avec son premier moyen de contre-palier (19) sur le premier moyen de palier (7) dans une deuxième position d'appui (P₂) différente de la première position d'appui (P₁) lorsqu'il est fixé au cadre de bicyclette (1) par couplage par force avec l'adaptateur de montage (32).

17. Cadre de bicyclette selon l'une des revendications précédentes, **caractérisé en ce que** le cadre de bicyclette (1) comprend un deuxième moyen de palier (9), et les premiers (12) et deuxièmes adaptateurs d'étrier de frein (22) comprennent chacun un deuxième moyen de contre-palier (27 ; 29),
le premier adaptateur d'étrier de frein (12) pouvant être appuyé avec son deuxième moyen de contre-palier (27) sur le deuxième moyen de palier (9) dans une troisième position d'appui (P₃) lorsqu'il est fixé au cadre de bicyclette (1) par couplage par force avec l'adaptateur de montage (32), et
le deuxième adaptateur d'étrier de frein (22) pouvant être appuyé avec son deuxième moyen de contre-palier (29) sur le deuxième moyen de palier (9) dans la même troisième position d'appui (P3) lorsqu'il est fixé au cadre de bicyclette (1) par couplage par force avec l'adaptateur de montage (32).

18. Cadre de bicyclette selon la revendication 17,
**caractérisé en ce que** le deuxième moyen de palier (9) et le deuxième moyen de contre-palier (19 ; 29) du premier (12) et/ou du deuxième adaptateur d'étrier de frein (22) forment un palier pivotant, par l'intermédiaire duquel le premier adaptateur d'étrier de frein (12) et/ou le deuxième adaptateur d'étrier de frein (22) peut(vent) être fixé(s) de manière pivotante sur le cadre de bicyclette (1) autour d'un axe de pivotement, en particulier l'axe de la roue ou un axe parallèle à celui-ci.

19. Cadre de bicyclette selon la revendication 16,
**caractérisé en ce que** le premier moyen de palier est formé sur une paroi du cadre de bicyclette (1) qui est opposée à la paroi de palier.

20. Dispositif de montage d'un moyen de freinage, destiné au montage soit d'un premier adaptateur d'étrier de frein (12), soit d'un deuxième adaptateur d'étrier de frein (22) différent du premier adaptateur d'étrier de frein, sur lesquels au moins un étrier de frein peut être monté sur un cadre de bicyclette (1), en particulier sur un cadre de bicyclette selon l'une des revendications 1 à 19, le dispositif de montage de moyen de freinage (30) comprenant un adaptateur de montage (32) de telle sorte que celui-ci peut être fixé de manière amovible dans un logement de l'adaptateur de montage (34) sur le cadre de bicyclette (1), et ce soit dans une première orientation de montage (A), soit dans une deuxième orientation de montage (B) différente de la première orientation de montage (A) ;
le premier adaptateur d'étrier de frein (12) pouvant, dans la première orientation de montage (A), être fixé au cadre de bicyclette (1) par couplage par force avec l'adaptateur de montage (32), et
dans la deuxième orientation de montage (B), le deuxième adaptateur d'étrier de frein (22) peut être fixé au cadre de bicyclette (1) par couplage par force avec l'adaptateur de montage (32).

21. Moyen de freinage destiné à être monté sur un cadre de bicyclette (1), en particulier selon l'une des revendications 1 à 19, comprenant au moins un premier adaptateur d'étrier de frein (12) et au moins un premier étrier de frein (108) pouvant être fixé à celui-ci, comprenant en outre
un adaptateur de montage (32) de telle sorte que celui-ci peut être fixé de manière amovible dans un logement de l'adaptateur de montage (34) sur le cadre de bicyclette (1), soit dans une première orientation de montage (A), soit dans au moins une deuxième orientation de montage (B) différente de la première orientation de montage (A) ;
le premier adaptateur d'étrier de frein (12) pouvant, dans la première orientation de montage (A), être fixé au cadre de bicyclette (1) par couplage par force avec l'adaptateur de montage (32), et
dans la deuxième orientation de montage (B), un deuxième adaptateur d'étrier de frein (22) différent du premier adaptateur d'étrier de frein (12) peut être fixé au cadre de bicyclette (1) par couplage par force avec l'adaptateur de montage (32) pour le montage au moins de la première mâchoire de frein (108) et/ou d'une deuxième mâchoire de frein (118) différente en particulier de la première mâchoire de frein (108).

22. Bicyclette comprenant un cadre de bicyclette (1) selon l'une des revendications 1 à 19, comprenant en outre
au moins une roue rotative (4) avec un premier disque de frein (106) et un moyen de freinage selon la revendication 21.
